(19) **Europäisches Patentamt**

**European Patent Office**

**Office européen des brevets**

(11) **EP 0 863 404 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(51) Int Cl.7: **G01P 3/48**

(21) Anmeldenummer: **97890052.0**

(22) Anmeldetag: **19.03.1997**

(54) **Verfahren und Vorrichtung zur Bestimmung der Drehzahl einer Brennkraftmaschine aus dem emittierten Schall**

Method and apparatus for the detection of an engine speed value from the emitted sound

Procédé et appareil de détection de la vitesse d'un moteur à partir du son émis

(84) Benannte Vertragsstaaten:
**AT BE DE ES FR GB IT LU NL**

(30) Priorität: **07.03.1997 AT 14797**

(43) Veröffentlichungstag der Anmeldung:
**09.09.1998 Patentblatt 1998/37**

(73) Patentinhaber: **AVL List GmbH**
**8020 Graz (AT)**

(72) Erfinder:
- **Koegeler, Hans-Michael, Dipl.Ing. Dr.**
**8010 Graz (AT)**
- **Zalar, Gerhard**
**8141 Unterpremstetten (AT)**
- **Harms, Klaus-Christoph, Dr.**
**8051 Graz (AT)**
- **Ponticelli, Martin, Dipl.Ing.**
**8010 Graz (AT)**

(74) Vertreter: **Pinter, Rudolf, Dipl.-Ing. et al**
**Patentanwälte**
**Klein, Pinter & Laminger OEG**
**Prinz-Eugen-Strasse 70**
**1040 Wien (AT)**

(56) Entgegenhaltungen:
**EP-A- 0 724 159          EP-A- 0 769 698**
**WO-A-94/17420          DE-A- 4 440 999**
**US-A- 4 452 079**

**Beschreibung**

Die Erfindung betrifft ein Verfahren zur Bestimmung der Drehzahl einer Brennkraftmaschine, wobei der von der Maschine erzeugte Schall fortlaufend detektiert und in ein elektrisches Meßsignal umgewandelt wird, und wobei das Meßsignal auf die erhaltene Drehzahlinformation untersucht und das Ergebnis zur Ermittlung einer Maßgröße für die Drehzahl verwendet wird. Weiters betrifft die Erfindung auch eine Vorrichtung zur Bestimmung der Drehzahl einer Brennkraftmaschine unter Durchführung eines derartigen Verfahrens, mit einem zumindest in der Nähe der Brennkraftmaschine angeordneten Schallsensor zum fortlaufenden Detektieren des von der Maschine erzeugten Schalls und Umwandeln in ein elektrisches Signal und einer damit und mit einer Ausgabeeinheit verbundenen Auswerteeinrichtung.

Für die Drehzahlmessung von Brennkraftmaschinen sind verschiedenste Anordnungen bzw. Verfahren bekannt, die zumeist mittels mechanischer oder elektrischer Abgriffe von Bewegungsgrößen, Zündsignalen oder dgl. arbeiten. Insbesondersim Zusammenhang mit den heutzutage zumeist gesetzlich vorgeschriebenen periodischen Untersuchungen von im öffentlichen Verkehr verwendeten Personen- und Lastkraftwagen ist es erwünscht, die Drehzahl eines als Antriebsmotor im Fahrzeug eingebauten, und während der Untersuchung natürlich in diesem verbleibenden Otto- oder Dieselmotors ohne aufwendige und für die unterschiedlichen Fahrzeugtypen von vornherein unterschiedliche Montage von zusätzlichen Sensoren, bzw. ohne eigene zusätzliche Kontaktierung von eventuell an der Brennkraftmaschine ohnedies befindlichen Sensoren, rasch, einfach und zuverlässig zu messen bzw. aufzunehmen und gegebenenfalls für die Auswertung beispielsweise von Abgasmessungen zur Verfügung zu stellen.

Zur Lösung dieser letztgenannten Aufgabe sind verschiedene Anordnungen und Verfahren der eingangs genannten Art bekanntgeworden. Bei Ottomotoren wird dazu häufig über einfache kapazitive oder induktive Geber das Zündsignal erfaßt und daraus die Drehzahl bestimmt, wie dies beispielsweise aus der DE 35 05 440 A1 bekannt ist. Die Möglichkeit bzw. Brauchbarkeit derartiger Verfahren und Anordnungen ist in hohem Maße vom Zustand der Zündanlage der geprüften Brennkraftmaschine abhängig und naturgemäß von vornherein bei Dieselmotoren ausgeschlossen. Bei Dieselmotoren wiederum ist beispielsweise durch die US-PS 4,173,896 die Verwendung sogenannter Aufklemmgeber bekannt geworden, die relativ einfach auf eine Einspritzleitung geklemmt werden können, um dort von außen und ohne Öffnung der Leitung ein Einspritzsignal zu erfassen und aus seiner periodischen Wiederkehr die Bestimmung der Drehzahl in einer entsprechenden Auswerteeinheit zu erlauben. Nachteilig ist dabei insbesonders die Einschränkung auf Dieselmotoren mit konventionellem Einspritzsystem (also auf Motoren mit frei zugänglicher Einspritzleitung) sowie die Notwendigkeit im Motorraum verschiedenster Fahrzeuge auf unterschiedlichste konkrete Weise hantieren zu müssen.

Beispielsweise aus der DE 26 48 382 A1 bzw. EP 0 315 357 A1 oder EP 0 408 877 A1 sind weitere Anordnungen bzw. Verfahren der eingangs genannten Art bekanntgeworden, die die oben beschriebenen Nachteile dadurch zu vermeiden versuchen, daß die vom Betrieb der Lichtmaschine der Brennkraftmaschine herrührende Restwelligkeit der elektrischen Bordnetzspannung des Fahrzeuges zur Drehzahlbestimmung verwendet wird. All diese Versuche kämpfen mit der Schwierigkeit, daß die Motoren- bzw. Fahrzeughersteller alles mögliche unternehmen, um die aus verschiedensten Aspekten unerwünschte Restwelligkeit der Bordnetzspannung möglichst klein zu halten (siehe beispielsweise DE 43 14 056 A1). Außerdem wird bei diesen Anordnungen und Verfahren in irgendeiner Form eine Referenz- bzw. Kalibriermessung benötigt, um das im allgemeinen unbekannte und auch verschiedenen Störungen (z. B. Riemenschlupf) unterworfene Übersetzungsverhältnis von Drehzahl der Brennkraftmaschine zur feststellbaren Signalfolgefrequenz der Restwelligkeit zu bestimmen. Weiters ist die bestechend einfach erscheinende Anbringungsmöglichkeit des eigentlichen Drehzahlsensors in Form eines elektrischen Steckkontaktes etwa für den Zigarettenanzünder des Fahrzeuges nicht allgemein akzeptiert, da nicht selten die zugehörige elektrische Sicherung des Fahrzeuges durchgebrannt ist, oder die Bordnetzanschlüsse zum Erreichen der elektromagnetischen Verträglichkeit (EMV) besonders befiltert sind.

Verfahren und Vorrichtungen der eingangs genannten Art, bei denen zur Drehzahlbestimmung der Umstand ausgenutzt wird, daß eine in Betrieb befindliche Brennkraftmaschine zufolge der Periodizität des Arbeitsspiels der beweglichen Teile entsprechende, mit der Drehzahl eng verknüpfte, periodische Schallsignale abgibt, aus denen mittels geeigneter Signalanalyse die Drehzahl oder eine Maßgröße dafür ermittelbar ist, sind beispielsweise aus DE 44 40 999 A1, US-PS 4,452,079, US-PS 3,289,077, EP 701 134 A1, EP 0 724 159 A1 und ähnlichen weiteren Schriften bekannt. Die Schwierigkeit bei der Anwendung dieser bekannten Verfahren und Vorrichtungen liegt stets hauptsächlich darin, daß die entweder über ein Mikrophon als Luftschall oder über einen Schwingungsaufnehmer als Körperschall aufgenommenen Schallsignale der in Betrieb befindlichen Brennkraftmaschine viele uncharakteristische, der periodischen Drehzahlinformation überlagerte Signalteile aufweisen, die im Zusammenhang mit Einflüssen der Anbringung der Schallaufnehmer und dgl. bei allen bisher bekannten Ansätzen eine sinnvolle und signifikante Drehzahlbestimmung praktisch nur im stationären Betrieb der Brennkraftmaschine zulassen. Da aber beispielsweise im Zusammenhang mit den heutzutage zumeist schon gesetzlich vorgeschriebenen Abgasuntersuchungen an als Antriebseinheit in Fahrzeugen eingebauten Brennkraftmaschinen auch Messungen im dynamischen Betrieb während des Hochlaufs der Brennkraftmaschine vorgeschrieben bzw. erforderlich sind, können die bekannten Anordnungen bzw. Verfahren mit Auswertung von Schallsignalen der Brennkraftmaschine bisher nicht allgemein zur Drehzahlermittlung eingesetzt werden.

Unter Berücksichtigung der oben angesprochenen Schwierigkeiten ist beispielsweise gemäß der bereits genannten EP 701 134 A1 bzw. auch gemäß DE 44 31 720 C1 bereits vorgeschlagen worden, im Leerlaufbetrieb einer zu prüfenden Brennkraftmaschine eine Drehzahlmessung mittels Auswertung von an der Brennkraftmaschine aufgenommenen Schallsignalen vorzunehmen und das Ergebnis dieser im stationären Betrieb vorgenommenen Messung sodann zur Kalibrierung der eigentlichen und über einen weiteren Drehzahlbereich erfolgenden Drehzahlmessung mittels Auswertung von Schwankungen der Bordnetzspannung zu verwenden. Fürdiese akustische Kalibriermessung werden im Frequenzspektrum des aufgenommenen akustischen Signals mehrere charakteristische Spektrallinien zur Verifizierung der gesuchten Drehzahl herangezogen, womit sich die absolute Drehzahl für diesen einen stationären Betriebspunkt ermitteln läßt, unter deren Zugrundelegung dann die über die Schwankungen der Bordnetzspannung ermittelbare relative Drehzahl kalibriert werden kann.

Der wesentliche Nachteil der zuletzt angesprochenen Methoden der Auswertung von Schallsignalen der Brennkraftmaschine liegt bis jetzt darin, daß Messungen im dynamischen Betrieb (moderne Fahrzeugmotoren benötigen für den freien Hochlauf von Leerlaufdrehzahl auf Höchstdrehzahl typischerweise Zeitspannen von unter einer Sekunde) nicht sinnvoll möglich sind bzw. häufig zu falschen und instabilen Ergebnissen führen.

Aufgabe der Erfindung ist es, die angesprochenen Nachteile der bekannten Anordnungen und Verfahren zu vermeiden und insbesonders ein einfaches und allgemein einsetzbares Verfahren sowie eine Vorrichtung der eingangs genannten Art bereitzustellen, mit denen absolute Drehzahlbestimmungen ohne aufwendige Vorarbeit an der zu prüfenden Brennkraftmaschine auch im hochdynamischen Meßbetrieb möglich sind.

Diese Aufgabe wird gemäß der vorliegenden Erfindung bei einem Verfahren der eingangs genannten Art gelöst durch grobes Abschätzen der jeweiligen Drehzahl der Brennkraftmaschine und Ermittlung eines Faktors (k(t)) aus der geschätzten Drehzahl und der bekannten Taktzahl der Brennkraftmaschine, Bestimmen einer annähernd zum Kurbelwinkel proportionalen Größe a aus der Beziehung delta_a = k(t) * delta_t bzw. da = k(t) * dt, signalanalytische Auswertung des Signals (u(t)) mithilfe bzw. auf Basis der Größe a und Bestimmen der Maßgröße für die Drehzahl (n) aus dem Ergebnis der signalanalytischen Auswertung des Signals (u(t)).

Die erfindungsgemäße Vorrichtung ist entsprechend gekennzeichnet durch eine mit der Auswerteeinrichtung in Verbindung stehende Abschätzeinheit zur groben Abschätzung der jeweiligen Drehzahl der Brennkraftmaschine und Ermittlung eines Faktors (k(t)) aus der geschätzten Drehzahl und der bekannten Taktzahl der Brennkraftmaschine und dadurch, dass die Auswerteeinrichtung eine Transformationseinheit zur Bestimmung einer annähernd zum Kurbelwinkel proportionalen Größe a aus der Beziehung delta_a = k(t)* delta_t bzw. da = k(t)* dt und zur signalanalytischen Auswertung des Signals (u(t)) mithilfe bzw. auf Basis der Größe a zur Untersuchung des vom Schallsensor in Abhängigkeit von der Zeit gelieferten Meßsignals (u(t)) auf Basis der angenähert kurbelwinkelproportionalen Größe (a) aufweist und eine Maßgröße für die Drehzahl (n) aus dem Ergebnis der signalanalytischen Auswertung des Signals (u(t)) ermittelt.

Die vorliegende Erfindung geht also von der Überlegung aus, daß die bisher bekannten Verfahren und Anordnungen zur Drehzahlbestimmung an Brennkraftmaschinen unter Auswertung von Schallsignalen der Brennkraftmaschine im wesentlichen deshalb nicht für dynamische Messungen geeignet sind, weil sie signalanalytische Verfahren einsetzen, die nur für stationäre Signale geeignet sind, und/oder weil sogenannte Nachlaufsysteme verwendet werden, bei denen im dynamischen Meßbetrieb naturgemäß stets hinterherhinkende Korrektur- und Suchalgorithmen für die einzelnen Drehzahlermittlungen verwendet werden. Entsprechend wird gemäß der vorliegenden Erfindung eine Art "Vorwärtsstrategie" angewandt, indem zwei gleichzeitig vorhandene Meßmerkmale für die gesuchte Drehzahl gemeinsam ausgewertet werden - das eine zur groben Schätzung einer Hilfsdrehzahl für die benötigte Zeitachsentransformation, das andere für die tatsächliche, signalanalytische Ermittlung der Drehzahl auf Basis der transformierten Achse.

Alle bekannten und auf die aufgenommenen Schallsignale der Brennkraftmaschine (hier und im folgenden ist es weitgehend egal, ob es sich um akustisch aufgenommenen Luftschall oder über Schwingungsaufnehmer an der Brennkraftmaschine direkt aufgenommenen Körperschall handelt) angewandten Signalanalysemethoden, z.B. Fourieranalyse, Kepstrum oder Autokorrelationsfunktionen, oder dgl., beruhen auf der notwendigen Annahme, daß die zu analysierenden Signale im Auswertefenster stationär sind oder dort zumindest einen hohen stationären Signalanteil besitzen. Das Anregungsspektrum einer frei beschleunigten Brennkraftmaschine ändert sich aber sehr rasch, sodaß die herkömmlichen Signalanalysemethoden auf Zeitbasis nicht ausreichend schnell bzw. genau in der Lage sind, einen derartigen Anregungszustand zweifelsfrei zu analysieren, weil er sich innerhalb eines Auswertefensters (typischerweise etwa 0,05 bis 1 Sekunde, je nach Genauigkeitsanforderungen) drastisch ändert. Gemäß der vorliegenden Erfindung wird deshalb nun zunächst eine Hilfsgröße ermittelt, die mit der jeweiligen Drehzahl prinzipiell nur in einem ungefähren Zusammenhang stehen muß, der auch nichtlinear und/oder fehlerbehaftet sein darf und der vorzugsweise natürlich annähernd drehzahlproportional und leicht bestimmbar sein sollte, darüber hinaus aber unkritisch ist. Als derartige Hilfsgröße kommen viele am Motor oder Fahrzeug bestimmbare Größen mit drehzahlabhängigen Merkmalen in Frage, wie der Fachmann unschwer erkennen und zu einer bestimmten Anwendung passend auswählen kann. Unter anderem können das pneumatische (z.B. Kurbelgehäusedruck), hydraulische (z.B. von der Schmierölversorgung) oder auch elektrische (z.B. von der elektrischen Anlage des Fahrzeuges) Größen sein. Vorteilhaft ist beispielsweise der Staudruck im Auspuff, weil er etwa bei den eingangs bereits angesprochenen Abgaßmeßgeräten leicht zusätzlich meßbar ist. Ebenso kommt beispielsweise der aufgenommene Schallpegel eines im, am oder außerhalb des Fahrzeuges angeordneten Luftschallmikrophons in der Nähe der Brennkraftmaschine bzw. von deren Auspuff dafür in Frage. In bevorzugter Ausgestaltung der Erfindung wird als derartige, grob drehzahlproportionale Hilfsgröße direkt eine Pegelgröße des aufgenommenen Körperschallsignals herangezogen. Dazu kann das Bedienungspersonal in einer Kalibrierungsprozedur aufgefordert werden, den Motor bei zumindest zwei unterschiedlich hohen Drehzahlen stationär zu betreiben, vorzugsweise im Leerlauf (Erwartungsbereich 350 bis 1200 UPM) und im oberen Leerlauf (Erwartungsbereich 1500 bis 6000 UPM). Es hat sich gezeigt, daß mittels beispielsweise der bekannten Kepstrumanalyse über ein Auswertefenster von etwa 1,5 Sekunden bei allen stationären Drehzahlen damit eine sichere Auswertung der stationären Motordrehzahl möglich ist. Besonders vorteilhaft ist dabei, daß dazu auch die Zylinderanzahl der geprüften Brennkraftmaschinen nicht bekannt sein bzw. eingegeben werden muß - lediglich das Arbeitsverfahren der Brennkraftmaschine (2- oder 4-Takt) muß bekannt bzw. eingegeben sein. Das Kepstrum zeigt sein höchstes Signal typischerweise bei der Periodendauer eines Arbeitsspiels. Das Ergebnis dieser Kalibrierprozedur liefert also zumindest zwei Wertepaare für Drehzahl und Lautstärke (bzw. ein sonstiges geeignetes Pegelmaß). Damit können die erforderlichen Kalibrierparameter bestimmt und die weitere Auswertung erfindungsgemäß auch für instationäre Drehzahlabschnitte sicher durchgeführt werden. Möglich ist natürlich auch, daß für bestimmte Motoren, bzw. Fahrzeuge, und eine zugehörige Sensoranbringung die benötigten Kalibrierparameter schon aus früheren Messungen bekannt und gespeichert sind und daher nicht jedesmal neu bestimmt werden müssen.

Zur weiteren Auswertung wird nun das im dynamischen Betrieb mit den angesprochenen Methoden nach dem Stande der Technik nicht entsprechend sicher auswertbare, in Abhängigkeit von der Zeit ermittelte Meßsignal mit Hilfe des durch Drehzahlabschätzung ermittelten Faktors auf Basis der damit bestimmten annähernd kurbelwinkelproportionalen und damit auch in einer Beschleunigungsphase naturgemäß stabilen bzw. nahezu motorsynchronen Größe untersucht, wozu in bevorzugter Ausgestaltung der Erfindung das zeitabhängig ermittelte Meßsignal bei der Untersuchung mittels des Faktors (k) auf einen kurbelwinkelabhängigen und damit angenähert drehzahlunabhängigen Signalverlauf transformiert und dieser sodann zur Bestimmung der Maßgröße für die Drehzahl durch Untersuchung auf Basis der angenähert kurbelwinkelproportionalen Größe verwendet wird. Die Untersuchungs- bzw. Analysemethoden entsprechen im wesentlichen den für ähnliche Aufgaben bekannten bzw. verwendeten, wobei hier aber die abgeschätzte kurbelwinkelproportionale Größe anstelle der Zeit als Basis für die Untersuchung dient.

Nach einer anderen Ausgestaltung der Erfindung kann auch vorgesehen sein, daß das zeitabhängig ermittelte Meßsignal mit Hilfe eines signalanalytischen Verfahrens auf Basis der angenähert kurbelwinkelproportionalen Größe untersucht wird, wobei das Analyseverfahren den erwähnten, aus der abgeschätzten Drehzahl ermittelten Faktor (k) zur Transformation der Zeitachse auf die angenähert kurbelwinkelproportionale Größe verwendet und aus dem so gewonnenen Untersuchungsergebnis die Maßgröße für die Drehzahl ermittelt wird.

Im einen Falle wird also das vorher auf Kurbelwinkelabhängigkeit transformierte Signal mit entsprechenden signalanalytischen Methoden untersucht. Im anderen Fall wird die Transformation der Zeitachse auf die angenähert kurbelwinkelproportionale Größe de facto in die Methode zur Signalanalyse eingebaut. Beides liefert im Endeffekt die beabsichtigte und auch für hochdynamische Anwendungen geeignete Untersuchung des grundsätzlich in Abhängigkeit von der Zeit ermittelten Meßsignals auf Basis der angenähert kurbelwinkelproportionalen Größe.

Zur Abschätzung der jeweiligen Drehzahl kann beim erfindungsgemäßen Verfahren wie bereits erwähnt, ein kalibrierter Zusammenhang zwischen einem Intensitätsmaß des detektierten Schalls und der signalanalytisch bestimmten Drehzahl verwendet werden, wobei diese Kalibrierung bevorzugt vor Durchführung der Messung bei zumindest zwei stationären Drehzahlen durchgeführt wird. Es gibt eine Vielzahl von bekannten Intensitätsmaßen für das Schallsignal. Neben dem in der Literatur definierten Schallpegel mit verschiedenen definierten Frequenzbewertungen sind auch Schallpegel mit speziellen Frequenzbewertungen bekannt, wobei zu beachten ist, daß eine Befilterung bereits durch den Frequenzgang des verwendeten Schallsensors samt Vorverstärker und durch das Anti-Aliasing-Filter gegeben ist. Aber auch z.B. die Resultate von Spitzenwertdetektoren mit vorgegebener Relaxationszeitkonstante oder mit Hilfe bekannter Algorithmen berechnete Hüllkurven des Signalverlaufs können in einem verallgemeinerten Sinn als Intensitätsmaße angesprochen werden.

Die ermittelten Maßgrößen für bereits bestimmte Drehzahlen können nach einer besonders bevorzugten weiteren Ausgestaltung der Erfindung zur Nachführung bzw. Verbesserung der Kalibrierparameter für nachfolgende Bestimmungen verwendet werden. Es handelt sich dabei nicht, wie eingangs angesprochen, um hinterherige Korrekturen der einzelnen Meßergebnisse oder um das Projizieren aktueller Meßwerte in die Zukunft, was erfahrungsgemäß im dynamischen Betrieb stets zu Ungenauigkeiten bzw. Verschmierungen über die Zeitachse und möglicherweise zu Instabilitäten der Meßanzeige führt, sondern um adaptive Verbesserungen der Kalibrierparameter, die sich nicht unmittelbar am jeweiligen Meßpunkt sondern nur insgesamt durch eine Verbesserung der Auswertung, vor allem in Bezug auf Meßgenauigkeit, Meßsicherheit und Erfolgsquote auch bei instationären Drehzahlen, bemerkbar machen.

In bevorzugter weiterer Ausgestaltung der Erfindung kann vorgesehen sein, daß für die Ermittlung des für die Drehzahlbestimmung signifikanten Signalpeaks im Ergebnisverlauf der Signalanalyse über einem Suchbereich um den Abszissen-Idealwert, vorzugsweise im Bereich zwischen dem 0,5-fachen und dem 2-fachen dieses Idealwerts, eine Gewichtsfunktion aufgespannt wird. Verschiedene der oben genannten signalanalytischen Verfahren liefern als Ergebnis einen Verlauf mit mehreren relativen Maxima oder Spitzen. Aufgrund verschiedener Einflüsse ist nicht immer die Lage des absoluten Maximums auch signifikant für die Bestimmung der Drehzahl. Beispielsweise findet man neben verschiedenen Störanteilen häufig ein absolutes Maximum beim oder nahe dem Abszissenwert Null, das weder als Frequenz oder Ordnung im Spektrum, noch als Periodendauer oder Kurbelwinkel im Kepstrum oder bei der Autokorrelation, viel mit der Drehzahl des Motors zu tun hat.

Erfindungsgemäß soll daher die Suche nach der signifikanten Spitze im Ergebnisverlauf durch die Anwendung einer Gewichtsfunktion unterstützt werden: Innerhalb eines Such- und Erwartungsbereiches der Abszisse rund um den Idealwert sollen der Verlauf und seine Maxima betont und außerhalb abgeschwächt werden. Auf diese Art kann der wahrscheinlich signifikante Peak unter anderen Peaks hervorgehoben werden. Infolge der erfindungsgemäßen Zeitachsentransformation ist dabei besonders vorteilhaft, daß der Such- und Erwartungsbereich unabhängig von der jeweiligen Drehzahl immer im selben Bereich der Abszisse aufgespannt werden kann und nicht den sich möglicherweise ständig und rasch ändernden Drehzahlen nachgeführt werden muß. Eine Periode des Arbeitsspiels dauert bei jedem Motor eben immer genau 1 Zyklus lang: Das sind beim 2-Takt-Motor eine und beim 4-Takt-Motor zwei volle Umdrehungen der Kurbelwelle, und das entspricht als Kehrwert der Periode einer Kurbelwellenordnung 1 beim 2-Takt-Motor und 0,5 beim 4-Takt-Motor.

In jedem Ergebnisverlauf der Signalanalyse auf Basis der angenähert kurbelwinkelproportionalen Größe gibt es also einen Abszissen-Idealwert, bei dem die für die Drehzahlbestimmung signifikante Spitze zu finden ist, wenn die Bezugshilfsdrehzahl mit der wahren Drehzahl übereinstimmt, was den Idealfall darstellt. Bewährt hat sich daher eine im Suchbereich aufgespannte Gewichtsfunktion die den Bereich um den Idealwert besonders betont und sich vorteilhaft zwischen dem 0,5-fachen und dem 2-fachen dieses Idealwerts erstreckt.

Wenn nun die signifikante Spitze statt beim Idealwert von z.B. 1 bei z.B. 0,8 liegt, dann lagen die verwendeten Hilfsdrehzahlen im Mittel um 20 % daneben. Zur Bestimmung der wahren Drehzahl n wird aus den in die Signalanalyse eingeflossenen Werten der Hilfsdrehzahl, bzw. des Faktors (k), durch Mittelwertbildung eine Bezugshilfsdrehzahl, bzw. ein Bezugsfaktor (K) gebildet, und um eben die registrierte Abweichung vom Idealwert korrigiert.

Als Kriterium für die Bestimmung des signifikanten Peaks im Ergebnisverlauf kann also im einfachsten Fall die höchste Spitze im Umfeld des Abszissen-Idealwerts genommen werden. Eine verbesserte Unterdrückung von eventuell vorhandenen Störungen wird durch die Verwendung der oben genannten Gewichtsfunktion erreicht, indem z.B. die höchste gewichtete Spitze als signifikanter Peak genommen wird.

Nach einer weiteren bevorzugten Ausgestaltung der Erfindung kann aber auch vorgesehen sein, daß für die Ermittlung des für die Drehzahlbestimmung signifikanten Signalpeaks im Ergebnisverlauf der Signalanalyse auf Basis der angenähert kurbelwinkelproportionalen Größe für die im Suchbereich ermittelten höchsten Signalpeaks ein Sicherheitsmaß gebildet und der Peak mit der höchsten zuerkannten Sicherheit als signifikanter Peak genommen wird. Diese Vorgangsweise bewirkt, daß kräftige, aber als unsicher erkannte Spitzen von eventuell vorhandenen Störungen nicht irrtümlich für die Drehzahlbestimmung herangezogen werden. Dabei kann sowohl vom ungewichteten als auch bevorzugterweise vom gewichteten Ergebnisverlauf ausgegangen werden.

In weiterer Ausgestaltung der Erfindung kann auch vorgesehen sein, daß jeweils für die bestimmte Drehzahl ein Sicherheitsmaß gebildet und überprüft wird und daß bei einem Wert des Sicherheitsmaßes außerhalb eines vorgebbaren Toleranzbereiches die jeweilige Einzelbestimmung der Drehzahl als nicht signifikant bewertet und/oder dem die Drehzahlbestimmung durchführenden Personal, z.B. durch ein Lichtsignal am Sensorkopf oder am Gerät, entsprechend angezeigt wird. Es kann damit ausgeschlossen werden, daß nach den gegebenen Erfahrungen eher unwahrscheinliche und/oder als unsicher erkannte Werte der bestimmten Drehzahl als signifikantes Meßergebnis angezeigt bzw. bewertet werden. Außerdem kann dadurch das Bedienungspersonal erkennen, daß möglicherweise die Stelle der Schalldetektion gewechselt werden sollte.

Als einfachstes Sicherheitsmaß kann direkt die Abweichung des als signifikant angenommenen Abszissenwerts vom Idealwert genommen werden. Bei zu großer Abweichung kann demgemäß die sich ergebende Drehzahl als nicht signifikant bewertet und/oder dem die Drehzahlbestimmung durchführenden Personal entsprechend angezeigt werden.

Neben dieser eher groben Signifikanzprüfung kann aber noch eine weitere vorgesehen sein, die als bevorzugtes Sicherheitsmaß eine Art Signal-zu-Rauschen-Verhältnis im Ergebnisverlauf der Signalanalyse auswertet. Dazu wird eine Regressionsgerade über alle im Such- und Erwartungsbereich befindlichen Werte des Ergebnisverlaufs der Signalanalyse gelegt und als Sicherheitswert einer gefundenen Spitze und damit eines zugehörigen Drehzahlwertes wird die den Wert der Regressionsgeraden an dieser Stelle übersteigende Höhe der Spitze relativ zur Höhe der im Such- und Erwartungsbereich absolut höchsten Spitze genommen. Ein Drehzahlwert wird nur dann als "sicher" betrachtet, wenn das Sicherheitsmaß der zugehörigen Spitze innerhalb eines Toleranzbandes liegt, bzw. einen Mindestwert aufweist.

Bei nicht signifikanter Drehzahlbestimmung kann schließlich vorgesehen sein, daß die grob abgeschätzte Drehzahl selbst als solche ausgegeben wird, wobei naturgemäß dieser Umstand für das Bedienpersonal unübersehbar kund getan werden sollte, damit dieses eventuell Abhilfe für die Ursache dieser Nichtermittelbarkeit einer signifikanten Drehzahl schaffen kann.

Gemäß der Erfindung ist also vorgesehen, daß laufend ein Merkmal (L) eines an der Brennkraftmaschine aufgenommenen Signals, vorzugsweise des Meßsignals (u(t)) selbst, bestimmt wird, daß aus diesem Merkmal (L) mit Hilfe von Parametern (P) näherungsweise ein die Grundfrequenz der Brennkraftmaschine charakterisierender Faktor (k) bestimmt wird, daß mit Hilfe dieses Faktors (k) die Differenzen (∆t) der Zeitbasis (t) in Differenzen (∆a) einer kurbelwinkelabhängigen Größe (a) transformiert werden, daß die Untersuchung des Meßsignals (u(t)) zur Bestimmung einer für die Drehzahl (n) der Brennkraftmaschine signifikanten Ergebnisgröße (E) auf Basis dieser Größe (a) erfolgt, daß ein Bezugsfaktor (K) aus den zur Bestimmung der Ergebnisgröße (E) verwendeten Werten des Faktors (k) bestimmt wird, und daß die Maßgröße für die Drehzahl (n) der Brennkraftmaschine aus der auf die Basis (a) bezogenen Ergebnisgröße (E) mit Hilfe des zugehörigen Bezugsfaktors (K) bestimmt wird. Der Faktor (k) für die Zeitachsentransformation ist also proportional zu einem groben Schätzwert der jeweiligen Drehzahl der Brennkraftmaschine. Er hat damit die Bedeutung einer Hilfsdrehzahl, die durchaus ungenau sein darf, jedoch den dynamischen Drehzahlverlauf qualitativ richtig wiedergibt.

Bei einer analytischen Darstellung oder für eine analog-elektronische Realisierung wäre der Faktor (k) als proportional zur Näherung des jeweiligen Differentialquotienten (da/dt) des kontinuierlichen Verlaufs der annähernd kurbelwinkelproportionalen Größe (a) über der Zeit (t) anzusehen und zu verwenden. Für die bevorzugte digital-elektronische Realisierung, beispielsweise mit einem Signalprozessor und einer zugehörigen Software, ist der Faktor (k) proportional zur Näherung des entsprechenden Differenzenquotienten (∆a/∆t) und wird daher zur näherungsweisen Umrechnung der diskreten Zeitintervalle (∆t) in diskrete Intervalle (∆a) der Größe (a) und zur Durchführung der eigentlichen Signalanalyse verwendet.

Da die Ergebnisgröße (E) der eigentlichen Signalanalyse auf der Basis der Größe (a) gebildet wird, braucht es auch eine Rücktransformation in den Zeitbereich. Die Zeit stellt ja die Basis der Drehzahlangabe dar. Zu diesem Zweck wird aus den zur Bestimmung der Ergebnisgröße (E) verwendeten Werten des Faktors (k) ein Bezugsfaktor (K) bestimmt, mit dessen Hilfe das kurbelwinkelbezogene Ergebnis in ein zeitbezogenes Ergebnis, nämlich die Drehzahl, umgerechnet wird. Der Bezugsfaktor (K) hat die selbe Dimension wie der Faktor (k) und ist z.B. im Fall der Spektral- oder Kepstralanalyse der Mittelwert des zur Analyse im Auswertebereich verwendeten Verlaufs des Faktors (k). Damit hat der Bezugsfaktor (K) die Bedeutung einer mittleren Hilfsdrehzahl.

Zur Bestimmung der Maßgröße für die Drehzahl wird in bevorzugter Ausgestaltung der Erfindung eine Kepstrumanalyse des jeweiligen Signalverlaufs durchgeführt, wobei der im Umfeld von einer Periode des Arbeitsspiels der Brennkraftmaschine liegende Abszissenwert des höchsten Signalpeaks im Kepstrum als Korrekturgröße für die Ermittlung der tatsächlichen Drehzahl aus der abgeschätzten Drehzahl verwendet wird. Aus Lehrbüchern und aus der technisch-wissenschaftlichen Literatur sind viele signalanalytische Verfahren auf Zeitbasis bekannt, deren Ergebnisse zum Teil sehr unterschiedlich erscheinende Maße zur Charakterisierung der Periodizität eines Signals darstellen. Diese Ergebnisse können aber auf ein Drehzahlmaß umgerechnet werden, soferne das Signal einer Drehmaschine zugeordnet ist. Beispiele dafür sind:

* Schwellwertabfrage (Triggern) zur Bestimmung der Zeitpunkte des Auftretens von periodisch auftretenden Signalspitzen und Messen der entsprechenden Zeitdifferenzen (Periodendauer).

* Wie oben, aber Messen der Frequenz (i.e. Häufigkeit des Auftretens der Signalspitzen pro Zeiteinheit), z.B. als Kehrwert der Periodendauer.

* Bestimmen der Zeitverschiebung (Periodendauer), bei der die Autokorrelationsfunktion des Signals ein Maximum wird und so die maximale Ähnlichkeit zwischen zeitverschobenen und periodisch wiederkehrenden Signalanteilen anzeigt.

* Bestimmen der Frequenz (i.e. reziproker Zeitabstand ähnlicher Signalanteile), bei der das Frequenzspektrum, das z.B. mit Hilfe einer FourierTransformation aus dem Signal erhalten wird, die höchste Spitze hat und so die deutlichste Periodizität im Zeitverlauf des Signals anzeigt.

* Bestimmen der Quefrenz (i.e. reziproker Frequenzabstand ähnlicher Spektralanteile, Grundperiode eines harmonischen Frequenzspektrums), bei der das Kepstrum, das z.B. mit Hilfe einer zweimaligen Fouriertransformation aus dem Signal erhalten wird, die höchste Spitze hat und so die deutlichste Periodizität im Frequenzspektrum des Signals und damit die bestimmende Grundperiode des Signalanteils mit dem am deutlichsten ausgeprägten harmonischen Frequenzspektrum anzeigt.

Im allgemeinen sind diese Verfahren in ihrer grundsätzlichen Ausgestaltung im unendlich ausgedehnten Zeit- und Frequenzbereich definiert. Sie können aber auch auf eingeschränkte zeitliche Abschnitte angewendet werden, wobei spezielle Funktionen, z.B. die Hanning-Funktion, zur Gewichtung des Signalverlaufs im auszuwertenden Zeit- oder Frequenzabschnitt, von Bedeutung sind. Für die praktische Anwendung sind verschiedene schnelle Algorithmen bekannt geworden, z.B. die sogenannte Fast-Fourier-Transform (FFT). Darüber hinaus sind aber auch rekursive Formulierungen dieser oder verwandter Verfahren bekannt geworden, z.B. Autokorrelationsfolgen oder die sogenannte Fourier-Time-Transformation (FTT) nach E. Terhardt, die - im Gegensatz zu einer abschnittsweisen - eine fortlaufende Analyse des Signals erlauben.

Die zuletzt genannte FTT ist außerdem ein Verfahren, das auch speziell für die zeitlich hochauflösende Frequenzanalyse angegeben wird. Für diesen Zweck bekannt geworden sind beispielsweise auch die Fourier-Kurzzeit-Spektroskopie zur Berechnung sogenannter Spektrogramme, die Wigrier-Ville-Verteilung und die verschiedenen Varianten der Wavelet-Analyse.

Alle diese bekannten, auf Zeitbasis dargestellten Verfahren liefern im dynamisch-transienten Betrieb einer Brennkraftmaschine keine zufriedenstellenden Resultate. Erst die erfindungsgemäße Transformation auf eine zum angenäherten Kurbelwinkel proportionale Basis macht ihre Anwendung im stationären und im transienten Betrieb brauchbar. Und dabei hat sich herausgestellt, daß die Kepstrum-Analyse besonders gute Resultate liefert.

Unter dem Kepstrum versteht man definitionsgemäß (vgl. z.B.: B.C. Günther, K.-H. Hansen, I. Veit: Technische Akustik. Kontakt + Studium, Band 18, Technische Akademie Esslingen, Herausgeber: W.J. Bartz. Lexika-Verlage 7031 Grafenau 1/Württemberg, 1978) die quadrierte Fourier-Rücktransformierte des logarithmierten Leistungsspektrums

$$|F^{-1} \, (\lg|F(u)|^2)|^2.$$

Man gelangt dazu, indem man das Signal u einer ersten Fouriertransformation F unterwirft und das Betragsquadratspektrum $|F(u)|^2$ bildet, dieses logarithmiert und in einer zweiten Fouriertransformation die inverse Fouriertransformierte $F^{-1}$ bildet, deren Quadrat des Kepstrum ergibt. Wenn die Funktionsvariable des Signals u die Zeit ist, so hat die Funktionsvariable des nach der ersten Fouriertransformation erhaltenen Spektrums die Dimension einer Frequenz, und die Funktionsvariable des Kepstrums wieder die Dimension einer Zeit, die den Kunstnamen Quefrenz trägt. Die Quefrenz gibt die spektrale Periodenzahl pro Frequenzeinheit (Hertz) an.

Erfolgt die Kepstrum-Analyse auf Basis des Kurbelwinkels, bzw. einer dazu proportionalen Größe, etwa der Zyklenzahl, so hat die Funktionsvariable des Spektrums die Dimension Ordnungszahl (i.e. Periodenzahl pro Umdrehung, bzw. Zyklus) und die des Kepstrums wiederum die Dimension eines Kurbelwinkels, bzw. einer Zyklenzahl.

Es sind auch Varianten des Kepstrums bekannt geworden, bei denen zum Beispiel das Betragsspektrum zu anderen Potenzen als 2 erhoben wird, und/oder bei denen statt des Logarithmierens andere lineare oder nichtlineare Bewertungen der spektralen Komponenten vorgenommen werden, und/oder bei denen die zweite Fouriertransformation vorwärts statt rückwärts durchgeführt wird und/oder der Ergebnisbetrag zu anderen Potenzen als 2 erhoben wird. Auch solche Varianten der Kepstrum-Analyse sollen hier unter der gemeinsamen Bezeichnung Kepstrum-Analyse gemeint sein.

Die Anwendung der zeitbasierten Kepstrum-Analyse zur Grundfrequenz- oder Drehzahlbestimmung ist an sich bekannt, jedoch nur für Signale mit hohem stationären Signalanteil im Auswertefenster. Beispielsweise wird in der oben genannten Literaturstelle auf Seite 166, Bild 8.3, anhand eines zeitbasierten Beispiels auch das Besondere der Kepstralanalyse gezeigt, daß nämlich die Grundschwingung des untersuchten Signals im Kepstrum als scharf ausgebildete Spitze bei der Periodendauer der Grundschwingung in Erscheinung tritt.

In weiterer Ausgestaltung der oben bereits angesprochenen erfindungsgemäßen Vorrichtung kann vorgesehen sein, daß die Abschätzeinheit eine aus dem Signal des Schallsensors ein Intensitätsmaß ermittelnde Intensitätsmeßeinheit zur Ermittlung des Faktors k aufweist, wobei sowohl die Auswerteeinrichtung als auch die Transformationseinheit, die Abschätzeinheit und die Intensitätsmeßeinheit sowohl hardwaremäßig als auch softwaremäßig realisiert sein können.

Nach einer bevorzugten weiteren Ausgestaltung der Erfindung ist eine Vorrichtung zur Durchführung des erfindungsgemäßen Verfahrens so ausgestaltet, daß die mit der Auswerteeinrichtung verbundene Ausgabeeinheit Elemente zur Indikation einer nichtsignifikanten Drehzahlbestimmung und/oder zur Aufforderung, die Stelle der Schalldetektierung zu wechseln, und/oder zur Indikation, daß nur die abgeschätzte Drehzahl ausgegeben wird, aufweist, was den normalen Meßbetrieb mit einer derartigen Vorrichtung sehr erleichtert.

In weiterer Ausgestaltung der Erfindung ist eine die gesamte Auswerteund Kalibrierprozedur eines Meßablaufs steuernde Steuereinheit vorgesehen, die vorzugsweise auch die für die Bestimmung und Verbesserung der Kalibrierparameter (P) geeigneten Meßsignale und Betriebszustände der Brennkraftmaschine selbsttätig bestimmt. Damit muß der Benutzer in keinen besonderen Dialog mit der Meßvorrichtung eintreten oder einen bestimmten Ablauf im Motorbetrieb einhalten. Aufgrund der in der Abschätzeinheit und der Auswerteeinheit ermittelten Folge von Werten für das Intensitätsmaß, die Hilfsdrehzahl, die Drehzahl und das Sicherheitsmaß gibt die Steuereinheit entsprechende Signale an die Ausgabeeinheit und vorzugsweise auch an die Kalibriereinheit, sodaß einerseits der Benutzer über die jeweilige volle oder teilweise Meßbereitschaft des Systems immer informiert ist und andererseits eine Bestimmung und Verbesserung der Kalibrierparameter selbsttätig erfolgt, wann immer das aufgrund einer als stationär erkannten Drehzahl und einem ausreichenden Sicherheitsmaß sinnvoll und möglich ist.

In besonders bevorzugter Ausgestaltung der Erfindung ist vorgesehen, daß der für die erfindungsgemäße Drehzahlbestimmung vorgesehene Schallsensor sowohl einen Luftschallsensor als auch einen Körperschallsensor aufweist. Damit wird dem Benutzer eine größtmögliche Freiheit bei der Anbringung des Schallsensors gegeben, denn eine der beiden Signalquellen liefert mit großer Wahrscheinlichkeit ein für die Drehzahlbestimmung brauchbares Signal. Weiters ist vorgesehen, daß die Steuereinheit selbsttätig die Verstärkung, Mischung, Auswahl und Zuordnung der von den beiden, vorzugsweise in gemeinsamen Gehäuse angeordneten Sensoren abgegebenen Signale zu einem Hilfssignal für die Ermittlung der Hilfsdrehzahl und einem Hauptsignal für die Bestimmung der Drehzahl steuert. Dadurch ist gewährleistet, daß das Signal, das Drehzahlwerte mit dem größten Sicherheitsmaß zu bestimmen gestattet, auch tatsächlich zum Einsatz kommt. Dabei kann es vorteilhaft sein, Haupt- und Hilfssignal den beiden verschiedenen Signalquellen zuzuordnen, oder insbesondere auch ein Mischsignal aus den beiden auf etwa gleichen Pegel gebrachten Signalen zu erzeugen und für die erfindungsgemäße Drehzahlbestimmung zu nutzen.

Die Erfindung wird im Folgenden noch anhand der in der Zeichnung schematisch dargestellten Diagramme und Ausführungsbeispiele näher erläutert.

Fig. 1 zeigt das Ablaufdiagramm einer bevorzugten Auswerte- und Kalibrierprozedur.
Fig. 2 zeigt ein gemessenes Schallsignal des Motors im Hochlauf und erläutert die Berechnung des Intensitätsmaßes (L) und der Hilfsdrehzahl (n_L).
Fig. 3 erläutert anhand eines synthetischen Signals die Bestimmung einer stationären Drehzahl mit Hilfe der zeitbasierten Spektral- und Kepstralanalyse.
Fig. 4 demonstriert das Versagen des in Fig. 3 angewendeten Verfahrens bei einer hochlaufähnlichen Drehzahländerung.
Fig. 5 erläutert die Anwendung der Erfindung auf das in Fig. 4 gezeigte Hochlaufsignal.
Fig. 6 zeigt schematisch eine erfindungsgemäße Vorrichtung.

In einer bevorzugten Ausführung wird ein Körperschallsensor mit einem Magnetfuß auf einem geeigneten Bauteil des Motors oder Fahrzeugs angebracht. Als Anbringungsstelle haben sich unter anderem Zylinderkopfschrauben, Motormontageösen, Motorblock, Ölablaßschraube, Fahrzeugrahmen, etc. bewährt. Aber auch der mit einem Mikrofon in der Nähe des Motors oder des Fahrzeuges aufgenommene Luftschall erlaubt die Drehzahlbestimmung nach gleichem Verfahren und mit ähnlich guten Resultaten wie der Körperschall, wie Versuche gezeigt haben. Es ist daher auch an eine Meßvorrichtung mit sowohl einem Körperschall- als auch einem Luftschallsensor gedacht, bei der entweder das jeweils bessere Meßsignal ausgewählt oder bei der die beiden Signale im Pegel aufeinander abgestimmt werden und daraus ein Mischsignal gebildet und zur Drehzahlbestimmung herangezogen wird.

Das also von mindestens einem Schallsensor samt Vorverstärker aufgenommene Meßsignal wird einem Anti-Aliasing-Filter (Grenzfrequenz zwischen 5 und 20 kHz) und einem Digitalisierer (Abtastrate mindestens die 2-fache Grenzfrequenz des Anti-Aliasing-Filters) zugeführt. Das digital dargestellte Signal wird in einem Rechner oder Signalprozessor weiterverarbeitet.

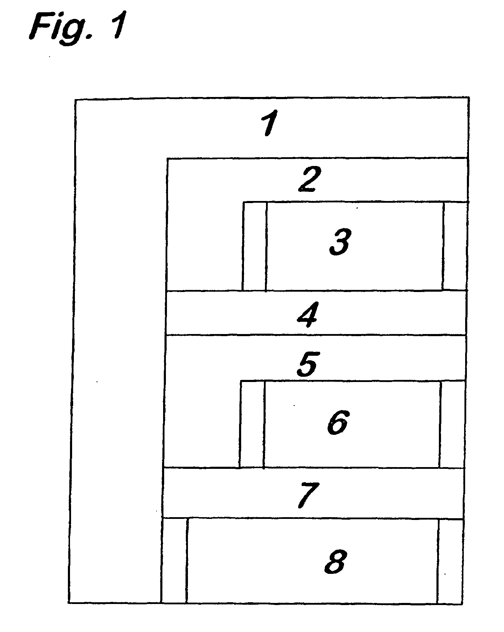

Fig. 1 zeigt den Ablauf einer bevorzugten Auswerte- und Kalibrierprozedur bei einer typischen Messung. In der Hauptschleife 1 wartet das Meßsystem darauf, daß das Bedienpersonal dem angezeigten Hinweis folgt und den Sensor an einer geeigneten Stelle anbringt. Sobald und solange ein Meßsignal mit ausreichender Amplitude zur Verfügung steht, kann der Schleifenkern (2 bis 8) abgearbeitet werden; anderenfalls wird die Messung beendet und eine neue kann begonnen werden.

Zu Beginn der Messung, in Schleife 2, erwartet das System, daß der Motor stationär im unteren Leerlauf läuft. Für den an der ausreichenden Konstanz des laufend ermittelten Intensitätsmaßes erkannten stationären Zustand wird in Block 3 mit Hilfe eines vorgegebenen groben Schätzwertes für die Drehzahl des Motors (z.B. 660 1/min.) das erfindungsgemäße Verfahren zur Bestimmung der Drehzahl durchgeführt. Die so ermittelte Drehzahl wird dann als vertrauenswürdig erachtet, wenn ein oben beschriebenes Sicherheitsmaß, z.B. die relative Höhe der maßgeblichen Spitze im Kepstrum, ausreichend hoch ist, z.B. 80 %. Diese Drehzahl und der zugehörige Wert des Intensitätsmaßes bilden ein erstes Wertepaar für die Kalibrierung des Zusammenhanges zwischen Drehzahl und Intensitätsmaß.

In Block 4 wird dem Benutzer der erfolgreiche Abschluß von Block 3 und damit die geeignete Sensoranbringung gemeinsam mit der ermittelten Drehzahl angezeigt.

In Schleife 5 und Block 6 erwartet das System einen zweiten stationären Betriebspunkt des Motors bei erhöhtem Leerlauf. So wie in Schleife 2 und Block 3 wird für den stationären Zustand und mit Hilfe eines zweiten vorgegebenen groben Schätzwertes für die Drehzahl des Motors (z.B. 3000 1/min.) ein zweites vertrauenswürdiges Wertepaar für Drehzahl und Intensitätsmaß ermittelt.

Über den in Fig. 1 dargestellten und bevorzugten Ablauf hinaus könnten bei weiteren stationären Drehzahlen weitere Wertepaare für die Kalibrierung der Hilfsdrehzahlbestimmung ermittelt werden, wobei bereits die mit Hilfe der beiden ersten Wertepaare durch lineare Interpolation bestimmbare Hilfsdrehzahl genutzt werden kann. Sobald weitere Wertepaare vorliegen, könnte damit eine Steigerung der Schätzgenauigkeit, z.B. durch Formulieren eines Ausgleichspolynoms höherer Ordnung, erzielt werden. Außerdem ist es natürlich möglich, bei stationären Drehzahlen die Drehzahlbestimmung auch zeitbasiert, also ohne die Transformation auf eine angenäherte kurbelwinkelproportionale Basis, durchzuführen. Aus Gründen der Einheitlichkeit im Verfahren empfiehlt es sich jedoch, sowohl in der Kalibrierphase als auch in der anschließenden Meßphase die selben Routinen zur Drehzahlbestimmung zu nutzen.

In Block 7 wird dem Benutzer die erfolgreiche Durchführung der Kalibrierphase angezeigt. Damit ist das Meßsystem bereit, in Block 8 das erfindungsgemäße Verfahren zur Drehzahlbestimmung auch bei hochdynamischen Drehzahländerungen durchzuführen und laufend die jeweilige Drehzahl, beispielsweise mit einer Auffrischrate von 2 bis 10 Hz, anzuzeigen.

Da auch in Block 8 laufend das Sicherheitsmaß bestimmt wird, kann dem Benutzer auch angezeigt werden, ob die aktuell angezeigten Drehzahlwerte vertrauenswürdig sind oder nicht. Bei nicht signifikanten Ergebnissen steht noch die geschätzte Hilfsdrehzahl als Information zur Verfügung, sodaß ein völliger Ausfall der Drehzahlanzeige weitgehend ausgeschlossen ist.

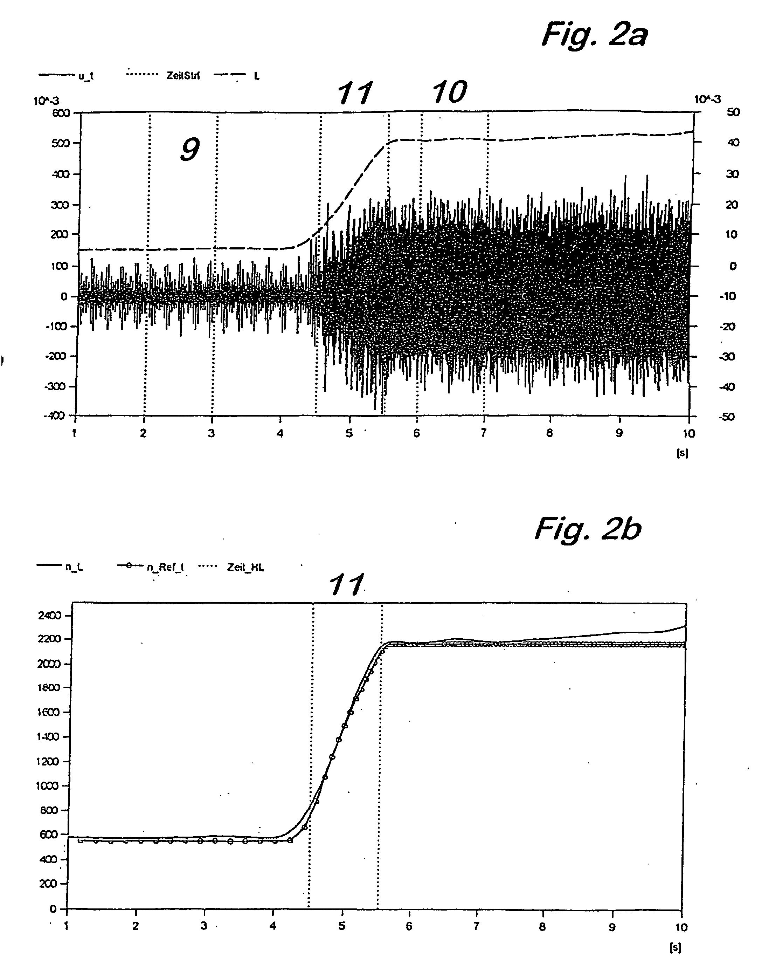

Anhand von Fig. 2 soll die Bestimmung der Hilfsdrehzahl erläutert werden.

Fig. 2a zeigt den zeitlichen Verlauf eines typischen Meßsignals (u_t) (entspricht (u(t)), das in diesem Fall mit einem an der Ölablaßschraube eines typischen 6-Zylinder LKW Dieselmotors angebrachten Körperschallsensor während einer Phase im unteren Leerlauf, einer Beschleunigungsphase und einer Phase im erhöhten Leerlauf bei Abregeldrehzahl gemessen wurde. Weiters zeigt Fig. 2a gestrichelt gezeichnet den Verlauf des aus dem Meßsignal ermittelten Intensitätsmaßes (L), das in diesem Fall als durch eine gleitende Mittelwertbildung geglätteter Absolutwert des mit einem Hochpaß (Grenzfrequenz 1500 Hz) gefilterten Meßsignals (u_t) bestimmt wurde.

Fig. 2b zeigt zeitgleich zur Fig. 2a die Verläufe der aus dem Intensitätsmaß (L) bestimmten Hilfsdrehzahl (n_L) im Vergleich zur Referenzdrehzahl (n_Ref_t) des Motors. Die Referenzdrehzahl wurde unabhängig vom erfindungsgemäßen System und nur für Vergleichszwecke gemessen, wobei ein auf eine Dieseleinspritzleitung geklemmter Klemmgeber zur Erfassung der bei jedem Zyklus auftretenden Einspritzdruckspitzen und damit zur Messung der Einspritzperiode, bzw. der Motordrehzahl, verwendet wurde.

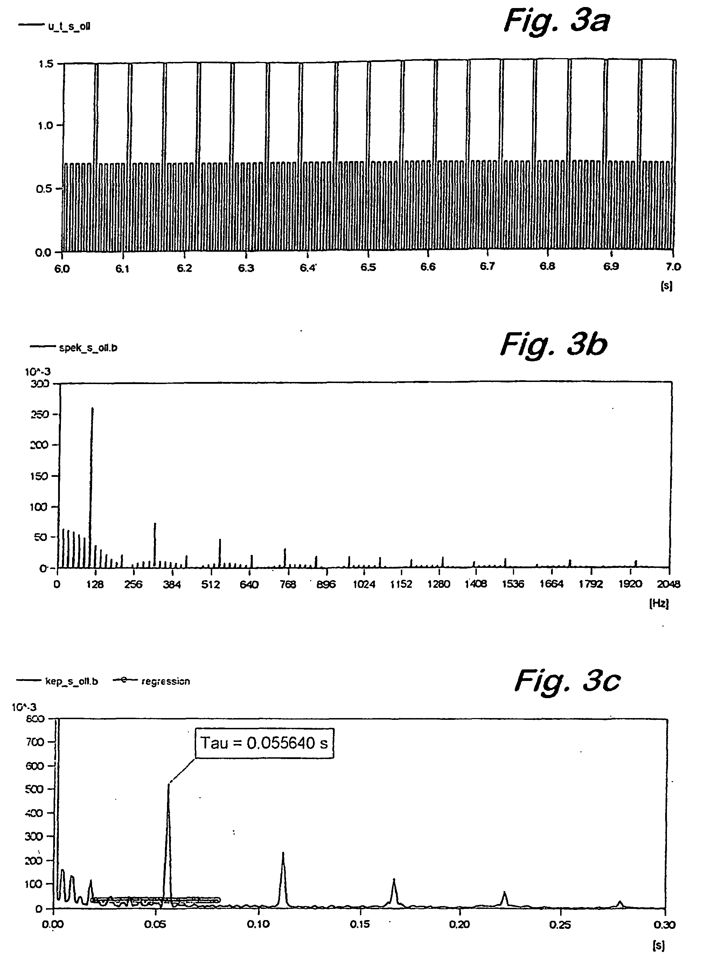

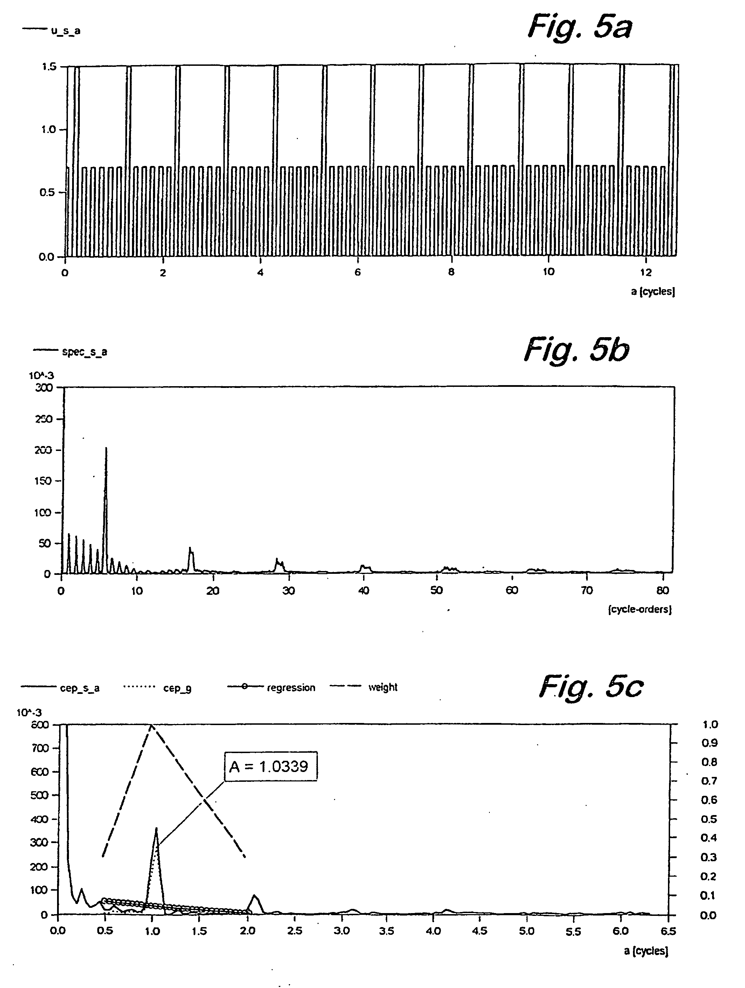

Zur Kalibrierung des Zusammenhanges zwischen Drehzahl und Intensitätsmaß wurden die in Fig. 2a durch gepunktete Linien eingegrenzten beiden Stationärphasen im unteren Leerlauf (9) und im erhöhten Leerlauf (Abregeldrehzahl) (10) herangezogen. Als Drehzahlwerte für die beiden Zeitabschnitte wurden die mit Hilfe der Kepstrum-Analyse aus dem tiepaßgefilterten (Grenzfrequenz: 1000 Hz) Schallsignal (u_t) von Fig. 2a berechneten und in der Tabelle (siehe Erläuterungen zu Fig. 3) angegebenen Werte verwendet. Die Kepstrum-Analyse selbst war gleich wie das bei Fig. 3 erläuterte signalanalytische Verfahren. Als Intensitätsmaße für die beiden Zeitabschnitte wurde jeweils der Mittelwert des im entsprechenden Zeitabschnitt gelegenen und in Fig. 2a gezeigten Verlaufs des Intensitätsmaßes (L) verwendet. Mit Hilfe der so erhaltenen beiden Wertepaare für Intensitätsmaß und Drehzahl wurde die Kalibrierfunktion linear formuliert. Um die Wirkung und die Robustheit des Verfahrens besser demonstrieren zu können, wurde ein additiver Fehler von +30 1/min in den ermittelten Kalibrier-Nullpunkts-Parameter eingebaut. Mit diesen bewußt verfälschten Parametern wurde dann der gesamte in Fig. 2b dargestellte Verlauf der Hilfsdrehzahl (n_L) aus dem in Fig. 2a dargestellten Verlauf des Intensitätsmaßes (L) berechnet und auch bei der Berechnung von Fig. 5 verwendet.

In den Fig. 3 bis 5 soll die erfindungsgemäße Drehzahlbestimmung der leichteren Verständlichkeit wegen nicht anhand des gemessenen Schallsignals, sondern anhand eines synthetischen Signalverlaufs erläutert werden. Dabei wurde das Signal so gewählt, daß wesentliche Merkmale der am Motor meßbaren Schallsignale erkennbar sind, insbesondere die Periodizität in der Zyklusgrundfrequenz und in der Zündfrequenz sowie ein charakteristischer Gehalt an zugehörigen Obertönen. Als anschaulich, einfach und ausreichend realitätsnahe hat sich ein Rechtecksignal erwiesen, bei dem das jeder Verbrennung zugeordnete Schallsignal durch ein Rechteck und die bei jedem Motor vorhandene Ungleichheit zwischen den einzelnen Zylindern des Motors und den ihnen zugeordneten Schallsignalen durch eine Überhöhung von nur einem Rechteck pro Zyklus dargestellt wird. Gewählt wurde wie bei den Meßsignalen von Fig. 2 ein 6-Zylinder-Motor.

Die Berechnung des synthetischen Signalverlaufs erfolgte zeitgleich zur Fig. 2 und erfolgte exakt nach dem dort dargestellten, gemessenen Referenzdrehzahlverlauf (n_Ref_t). Die zeitliche Dauer jeder Rechteckperiode wurde genau so gewählt, daß sie mit der aus der jeweiligen mittleren Referenzdrehzahl dieses Zeitpunktes bestimmten Zündperiode des Motors übereinstimmt. Die zeitliche Auflösung (Abtastrate) des synthetischen Signals beträgt 4096 Punkte pro Sekunde.

Fig. 3a zeigt den zeitlichen Verlauf des synthetischen Signals (u_t_s_oll) in dem in Fig. 2 angegebenen Zeitabschnitt 10, für einen stationären Betriebspunkt bei erhöhtem Leerlauf, bei der Abregeldrehzahl.

Fig. 3b zeigt das aus dem Signal von Fig. 3a nach einer einfachen zeitbasierten FFT (Fast-Fourier-Transform) erhaltene Amplitudenspektrum. Für die 4096 Punkte des Signals im Zeitfenster (10) von 6,0 bis 7,0 sec ergibt die FFT 2048 Frequenzpunkte und eine Frequenzauflösung von 1 Hz. Man erkennt deutlich das in der Zyklusfrequenz und in der Zündfrequenz harmonische Spektrum.

Anzumerken ist hier auch eine gewisse, bewußt zugelassene Realitätsferne des gewählten synthetischen Signals, da im Spektrum des synthetischen Signals (Fig. 3b) auch im oberen Leerlauf die Zündfrequenz dominiert. Wie dem Fachmann aber wohl bekannt ist, dominiert im Schallsignal des Motors zwar im unteren Leerlauf meistens die Zündfrequenz, bei höheren Drehzahlen sind aber häufig andere Frequenzen stärker ausgeprägt als die Zündfrequenz, sodaß eine Suche nur nach der Zündfrequenzamplitude als höchster Spitze im Spektrum eine nur geringe Erfolgsquote hätte.

Fig. 3c zeigt ein aus dem Frequenzspektrum (Fig. 3a) zeitbasiert berechnetes Kepstrum des synthetischen Signals (Fig. 3a), wobei vom Spektrum nur der Ausschnitt bis 1024 Hz verwendet wurde. Die Berechnung erfolgte durch Logarithmieren des Amplitudenspektrums und anschließende Fouriertransformation mit Darstellung des Betrages. Man erkennt neben dem nicht zu beachtenden absoluten Maximum beim Abszissenwert Null, dessen Bedeutung mit der "Ähnlichkeit des Signals mit sich selbst" umschrieben werden kann, eine deutlich größte Spitze beim Abszissenwert (Tau) von 55,64 ms, der die Periodendauer eines Motorzyklus angibt.

Die Drehzahl des Motors n, angegeben in [1/min], wird aus der Motorzyklusdauer Tau, angegeben in [s], bei Kenntnis der Taktanzahl tv des Arbeitsverfahrens des Motors durch folgende Formel berechnet:

$$n = 30 \cdot tv/Tau$$

wobei für den Viertaktmotor tv = 4 und für den Zweitaktmotor tv = 2 zu setzen ist.

Das in Fig. 3c gezeigte Kepstrum des synthetischen Signals hat große Ähnlichkeit mit dem gemessener Schallsignale. Unterschiede bestehen insofern, als manche der harmonisch zur Zyklusperiode auftretenden Spitzen manchmal noch deutlicher ausgebildet sind und sogar die Spitze bei der Zyklusperiode überragen können. Es ist daher vorteilhaft, einen Suchalgorithmus und ein Sicherheitsmaß anzuwenden, um die signifikante Spitze und ein Maß für deren Signifikanz angeben zu können. Vorteilhafterweise wird dazu ein Such- und Erwartungsbereich vorgegeben, in dem die Suche erfolgen soll, und in dem eine Regressionsgerade aus allen Werten bestimmt wird. Das Sicherheitsmaß Si für jede im Suchbereich enthaltene Spitze wird nun definiert als relative Höhe dieser Spitze über der Regressionsgeraden:

$$Si = (Ogf - Rgf)/Oh$$

wobei

Ogf    Ordinate der gefundenen Spitze
Rgf    Ordinate der Regressionsgeraden beim Abszissenwert der gefundenen Spitze
Oh    Ordinate der absolut höchsten Spitze im Suchbereich

Als signifikante Spitze des Kepstrums wird dann beispielsweise aus den drei höchsten Spitzen des Suchbereichs jene mit dem niedrigsten Abszissenwert (Periodendauer) und einem über einem vorgegebenen Mindestschwellwert liegenden Sicherheitsmaß ausgewählt.

Mit dieser Methodik kann also bei stationären Drehzahlen die jeweilige Drehzahl gut erkannt werden, wie die folgende Tabelle mit Werten für die in Fig. 2 eingetragenen Zeitabschnitte 9, 10 und 11 zeigt:

| Zeitfenster (Fig. 2a) | 9 | 10 | 11 |
|---|---|---|---|
| Betriebszustand | unterer Leerlauf | erhöhter Leerlauf | Hochlauf |
| mittlere Referenzdrehzahl [1/min] | 550 | 2156 | 1465 |
| Drehzahl [1/min] aus Kepstrum (Zeitbasis) | 549 | 2157 | -- |
| Sicherheitsmaß | 94 % | 93 % | -- |
| Hilfsdrehzahl [1/min] (Versatz: + 30 1/min) | 579 | 2187 | 1511 |

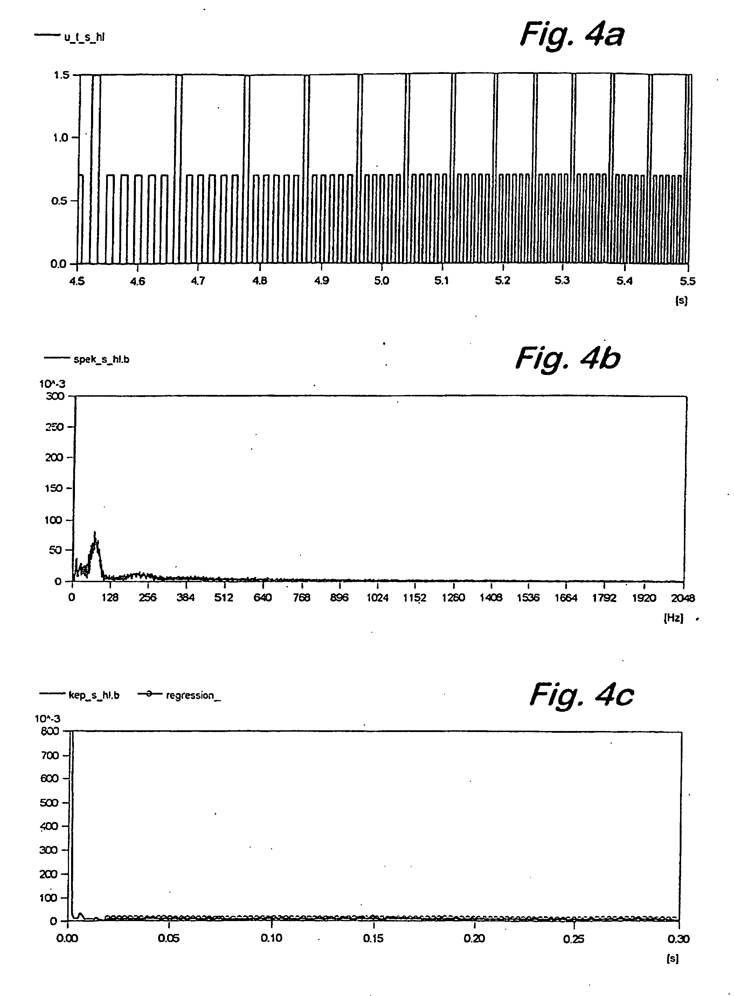

In der Tabelle sind die Referenzdrehzahlwerte sowie die aus dem Kepstrum auf Zeitbasis ermittelten Drehzahlwerte und deren Sicherheitsmaße angegeben. Die Übereinstimmung für die Zeitabschnitte 9 und 10 ist gut, hingegen versagt die zeitbasierte Kepstrum-Analyse im instationären Abschnitt 11, dem Hochlauf, wie im folgenden anhand Fig. 4 erläutert wird.

Fig. 4a zeigt den zeitlichen Verlauf des synthetischen Signals im Zeitabschnitt 11. Das synthetische Signal läßt deutlich die Änderung der Periodendauer erkennen, was beim gemessenen Schallsignal nicht so augenscheinlich wäre.

Fig. 4b zeigt das wie in Fig. 3b zeitbasiert berechnete Frequenzspektrum zum Signal von Fig. 4a, und Fig. 4c zeigt das zugehörige zeitbasierte Kepstrum. Man erkennt, daß die Verläufe "verschmiert" sind, sodaß keine signifikanten Spitzen gefunden werden können.

Kernpunkt der vorliegenden Erfindung ist nun, daß die der Analyse des Meßsignals zugrundeliegende Zeitbasis mit Hilfe einer grob geschätzten Hilfsdrehzahl so transformiert wird, daß die in Fig. 4 gezeigte "Verschmierung" der Analyseergebnisse weitgehend verhindert wird. Das gelingt, wenn der Analyse statt der Zeitbasis eine zum angenäherten Kurbelwinkel des Motors proportionale Basis zugrunde gelegt wird. Das einer digital-elektronischen Datenverarbeitung zugrundeliegende Zeitintervall $\Delta$t, z.B. das Abtastintervall, ist also proportional einem kurbelwinkelproportionalen Intervall $\Delta$a. Verwendet man als Maß für das Intervall $\Delta$a die Zykluszahl des Motors und bezeichnet man mit k den die Proportionalität und damit die jeweilige Drehzahl des Motors charakterisierenden Faktor, beispielsweise gemessen in Zyklen pro Sekunde, so erhält man folgende Transformationsgleichung:

$$\Delta a = k \cdot \Delta t$$

wobei k durch die momentane Hilfsdrehzahl (n_L), angegeben in 1/min, und die Taktzahl tv des Motors (2 oder 4) gegeben ist:

$$k = n\_L/(30 \cdot tv)$$

Fig. 5a zeigt die Anwendung dieser Zeitachsentransformation auf das synthetische Signal im instationären Zeitabschnitt 11, dem Hochlauf. Man erkennt, daß der über der angenäherten Zykluszahl a aufgetragene Signalverlauf stationär aussieht. Die Anwendung der zykluszahlbasierten SpektrumAnalyse (Fig. 5b) und Kepstrum-Analyse (Fig. 5c) erzeugt ein im Erscheinungsbild ähnliches Ergebnis wie die in Fig. 3b und Fig. 3c dargestellte zeitbasierte Analyse des stationären Signals von Fig. 3a. Hier wird deutlich, weshalb zur Darstellung ein synthetisches Signal verwendet wird: Der prinzipielle Zusammenhang und seine Nutzbarkeit gilt in gleicher Weise auch für die am Motor aufgenommenen Schallsignale; nur die augenscheinliche Übereinstimmung von Fig. 5 mit Fig. 3 im Unterschied zu Fig. 4 könnten aufgrund der großen Bandbreite und der hochfrequente Signalanteile der realen Schallsignale nicht so leicht demonstriert werden.

Die in Fig. 5 gezeigte Anwendung der Zeitachsentransformation auf das Signal zur anschließenden signalanalytischen Auswertung kann optimiert werden, indem der Rechenaufwand durch eine interpolierende Nachabtastung auf eine konstante Punktezahl pro Zykluszahl reduziert wird. Das hat weiters zur Folge, daß bei einer gegebenen Punktezahl von beispielsweise 2048 Punkten pro FFT die zeitliche Fensterbreite bei hohen Drehzahlen gering und bei geringen Drehzahlen vergleichsweise länger ist, was Vorteile in der Meßgenauigkeit und in der zeitlichen Meßauflösung bewirkt.

Wesentlich ist auch, daß die erfindungsgemäße Zeitachsentransformation - anders als in Fig. 5 gezeigt - auch in das signalanalytische Verfahren eingebaut werden kann, wie anhand einer einfachen, analytisch dargestellten Fouriertransformation gezeigt werden soll, von der eine entsprechende zeitdiskrete Darstellung mit den üblichen Methoden einfach abgeleitet werden kann.

Für einen Signalverlauf u(t) in Abhängigkeit von der Zeit t lautet die Fouriertransformation in komplexer Schreibweise

$$U(f) = \int u(t) \cdot e^{-j2\pi ft} \cdot dt$$

wobei f die Frequenz und j die imaginäre Einheit bedeuten.

Bezeichnet man mit p die zur Basis a (so wie f zu t) gehörige Ordnungszahl, so lautet die Fouriertransformation:

$$U(p) = \int u(a) \cdot e^{-j2\pi pa} \cdot da$$

Die Anwendung der Zeitachsentransformation mit Hilfe eines die Hilfsdrehzahl charakterisierenden Faktors k bestimmt die neue Basis a:

$$da = k(t) \cdot dt \text{ und } a = \int k(t) \cdot dt$$

Da u(a) aufgrund der eindeutigen Zuordnung von a(t) und t durch u(t) ersetzt werden kann, folgt

$$U(p) = \int u(t) \cdot e^{-j2\pi p \int k(t) \cdot dt} \cdot k(t) \cdot dt$$

Die Ordnungsanalyse kann also auch mit Hilfe einer modifizierten Fouriertransformation direkt aus dem zeitlichen Verlauf des Signals und dem zeitlichen Verlauf der Hilfsdrehzahl durchgeführt werden. Ähnliches gilt natürlich auch für die Kepstrum-Analyse und sonstige signalanalytische Verfahren.

In Fig. 5c ist auch die im Such- und Erwartungsbereich von 0,5 bis 2 Zyklen bestimmte Regressionsgerade (regression) zur Bestimmung des Sicherheitsmaßes eingetragen. Außerdem sieht man strichliert eine Gewichtungsfunktion (weight), die den Kepstralverlauf (cep_s_a) in der Nähe der Zykluszahl 1 betont und so die Suche der für die Drehzahl signifikanten Spitze erleichtert. Der gewichtete Kepstralverlauf (cep_g) ist punktiert eingezeichnet.

In Fig. 5c ist weiters als Ergebnis (E) der Kepstralanalyse die Zyklenzahl (A) mit 1,0339 eingetragen: Das ist hier der Abszissenwert bei der höchsten Spitze im gewichteten Kepstrum. Dieser Wert, bzw. seine Abweichung von der Zyklenzahl 1, besagt, daß die der Zeittransformation zugrundegelegten Werte der Hilfsdrehzahl im Mittel um 3,39 % zu groß waren. In diesem Beispiel lag der Mittelwert des Hilfsdrehzahlverlaufs bei 1511 1/min, wie in der Tabelle eingetragen ist. Diese mittlere Hilfsdrehzahl (naux) steht hier mit dem Bezugsfaktor (K) in folgender Beziehung:

$$naux = K \cdot 30 \, tv$$

wenn man den oben angegebenen Zusammenhang zwischen dem Faktor (k) und der Hilfsdrehzahl (n_L) zugrundelegt. Aus dem mittleren Hilfsdrehzahlwert (naux) wird der erfindungsgemäß bestimmte mittlere Drehzahlwert (n) im betrachteten Zeitabschnitt 11 von Fig. 2a mit Hilfe der Formel

$$n = naux / A$$

zu 1461 1/min berechnet. Der Meßfehler in diesem Beispiel beträgt nur 4 [1/min] oder 0,3 %, was in Anbetracht der hochdynamischen Drehzahländerung ein gutes Resultat darstellt.

Die Abweichung der geschätzten Drehzahl (naux) von der bestimmten Drehzahl (n) beträgt in diesem Beispiel +50 [1/min] oder +3,39 %. Damit ist diese Abweichung jedenfalls geringer als eine maximal zulässige Abweichung von beispielsweise - 50 % und + 100 %, und die Drehzahl konnte zurecht in diesem Suchbereich bestimmt werden.

Das für die Spitze in Fig. 5c ermittelte Sicherheitsmaß beträgt 89,4 % und ist damit wesentlich größer als ein minimal zulässiger Wert von beispielsweise 60 %, sodaß die ermittelte Drehzahl als signifikant bestätigt wird.

In diesem Beispiel kann also die ermittelte Drehzahl als vertrauenswürdiger Wert angezeigt werden und es besteht keine Notwendigkeit, statt dessen die Hilfsdrehzahl anzuzeigen und den Benutzer darüber zu informieren.

Jeder auf diese Art neu ermittelte Drehzahlwert kann nun auch verwendet werden, um die bei der Ermittlung der Hilfsdrehzahl verwendeten Kalibrierparameter zu verbessern und so den Schätzfehler bei nachfolgenden Bestimmungen zu verringern, was wiederum eine Steigerung der Meßsicherheit mit sich bringt. Das erfolgt im Sinne der schon erwähnten "Vorwärtsstrategie" ohne daß der Drehzahlverlauf, ausgehend von einem aktuellen Drehzahlwert, in die Zukunft extrapoliert und etwa zum Öffnen eines Suchfensters für einen neuen Wert verwendet wird, wie das bei sogenannten "Nachlaufsystemen" der Fall ist: Vielmehr erfolgt die Bestimmung der zur Definition des Such und Erwartungsbereichs führenden Hilfsdrehzahl immer aus einem aktuell gemessenen Signalmerkmal (L) und mit Hilfe von drehzahlunabhängigen Kalibrierparametern (P). Diese Parameter sind Motor- und Montage-bezogene Systemparameter, die sich während einer auch länger andauernden Messung praktisch nicht oder nur geringfügig, zum Beispiel im Zuge der Motorerwärmung, ändern. Sie beschreiben aber einen im allgemeinen nichtlinearen und auch Störgrößen unterworfenen Zusammenhang, sodaß eine laufende Verbesserung ihrer Werte mit Hilfe der aktuell gewonnenen Meßergebnisse sinnvoll ist. Damit zeigt der von der Hilfsdrehzahl abhängige Such- und Erwartungsbereich nur die geringfügigen, von der Parameteroptimierung und von eventuellen Störgrößen herrührenden Schwankungen, nicht aber die vergleichsweise extrem großen Schwankungen der Drehzahl selbst, was zur Stabilität und zur Leistungsfähigkeit des Verfahrens wesentlich beiträgt.

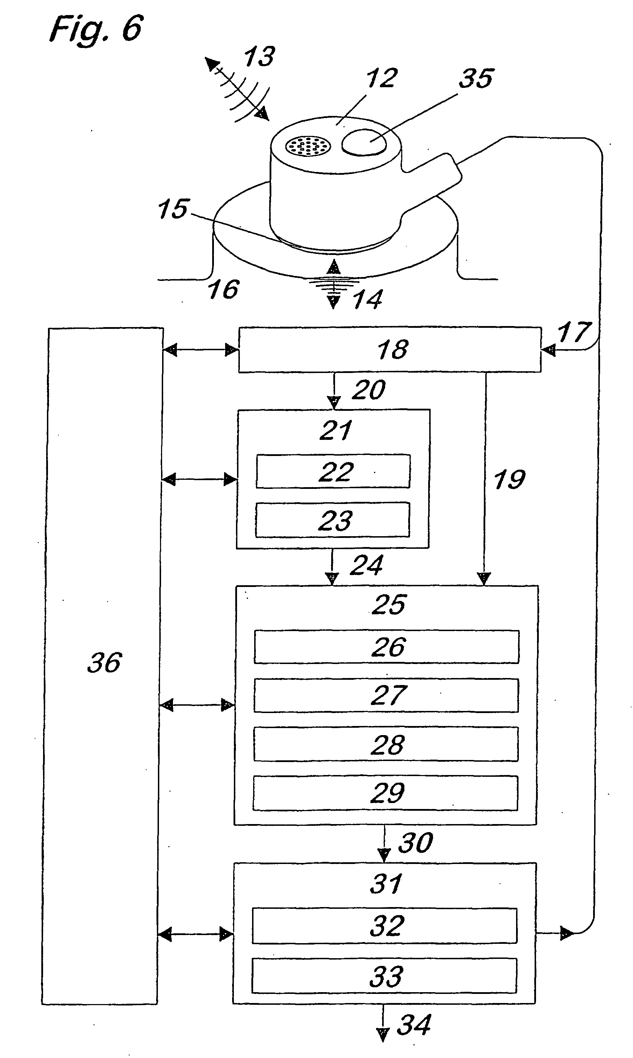

In Fig. 6 wird eine Vorrichtung zur Durchführung des erfindungsgemäßen Verfahrens gezeigt.

Eine Sensoreinheit 12, die im gezeigten Beispiel in einem Gehäuse sowohl einen Lufschallsensor (Mikrofon) für Luftschall 13 als auch einen Körperschallsensor (z.B. Beschleunigungssensor) für Köperschall 14 enthält, wird mit Hilfe eines Magnetfußes 15 direkt an der Brennkraftmaschine 16, oder möglicherweise auch z.B. am Fahzeugrahmen oder an einem in der Nähe des Fahrzeuges aufgestellten Stativ, angebracht. Die detektierten Signale 17 werden einer Signalkonditioniereinheit 18 zugeführt und dort so verstärkt, gefiltert und gegebenenfalls digitalisiert, daß sowohl ein Hauptsignal 19 der Auswerteeinheit 25 als auch ein Hilfssignal 20 der Abschätzeinheit 21 zugeführt werden können. Eine Steuereinheit 36 steuert die Verstärkung, und gegebenenfalls Mischung der Signale 17 sowie ihre Zuordnung zum Hauptsignal 19 und Hilfssignal 20.

Die Abschätzeinheit 21 enthält eine Intensitätsmeßeinheit 22, in der aus dem Hilfssignal 20 laufend ein Intensitätsmaß und daraus eine Hilfsdrehzahl 24, bzw. ein Faktor (k), für die Zeitachsentransformation ermittelt wird. Die für die Abschätzung benötigten Kalibrierparameter werden in einer von der Steuereinheit 36 gesteuerten Kalibriereinheit 23 zu Beginn eines Meßablaufs erstmals ermittelt und dann laufend verbessert.

Die Auswerteeinheit 25 enthält eine Transformationseinheit 26, in der aus der von der Abschätzeinheit 21 übermittelten Hilfsdrehzahl 24, bzw. dem Faktor (k), die neue Basis (a) für die im eigentlichen Signalanalysator 27 durchgeführte Analyse des Hauptsignals 19 gebildet wird. In der Sicherheitsmaßbestimmeinheit 28 wird überprüft, ob das Analyseergebnis eine eindeutige Drehzahlbestimmung mit ausreichender Signifikanz zuläßt und ob das Sicherheitsmaß des neuen Drehzahlwertes ausreichend hoch ist. In der Drehzahlbestimmeinheit 29 wird aus den in der Analyse verwendeten Werten der Hilfsdrehzahl 24, bzw. des Faktors (k), eine Bezugshilfsdrehzahl (naux), bzw. ein Bezugsfaktor (K), gebildet und damit aus dem Analyseergebnis die Drehzahl 30 bestimmt.

Die mit der Auswerteeinheit 25 und mit der Steuereinheit 36 verbundene Ausgabeeinheit 31 enthält Elemente zur Drehzahlanzeige 32 und zur Zustandsanzeige 35. An die Ausgabeeinheit 31 können weitere Geräte, etwa ein bereits angesprochenes Abgasmeßgerät, zur Übernahme der ausgegebenen Status- und Drehzahlinformationen 34 ausgeschlossen sein. Die mit der Sensoreinheit 12 verbundene Leuchtanzeige 35, z.B. eine Leuchtdiode mit zwei unabhängig aktivierbaren Leuchtfarben, ist ebenfalls ein Element der Ausgabeeinheit 31 und wird zur Anzeige z.B. der folgenden Zustände verwendet:

- Kein geeignetes Meßsignal vorhanden, bitte Sensoranbringung verbessern
- Geeignetes Meßsignal vorhanden, bitte Kalibrierphase durchführen
- Messung läuft mit guter Sicherheit
- Messung läuft mit schlechter Sicherheit

Die Steuereinheit 36 ist, wie schon erwähnt, für die Steuerung der gesamten Auswerte- und Kalibrierprozedur (vgl. Fig. 1) und für die sinnvolle Koordination der verschiedenen Einheiten und ihrer Fuktionen zuständig. Sie verhilft der gesamten Vorrichtung auch zu einer ansprechenden und benützerfreundlichen Bedienoberfläche, sodaß die Drehzahlmessung an weitgehend allen Fahrzeugen auch während des Hochlaufs einfach und sicher durchgeführt werden kann.

**Patentansprüche**

**1.** Verfahren zur Bestimmung der Drehzahl (n) einer Brennkraftmaschine, wobei der von der Maschine erzeugte Schall fortlaufend detektiert und in ein elektrisches Meßsignal (u(t)) umgewandelt wird, und wobei das Meßsignal (u(t)) auf die enthaltene Drehzahlinformation untersucht und das Ergebnis zur Ermittlung einer Maßgröße für die Drehzahl (n) verwendet wird, **gekennzeichnet durch**

a) grobes Abschätzen der jeweiligen Drehzahl der Brennkraftmaschine und Ermittlung eines Faktors (k(t)) aus der geschätzten Drehzahl und der bekannten Taktzahl der Brennkraftmaschine
b) Bestimmen einer annähernd zum Kurbelwinkel proportionalen Größe a aus der Beziehung delta_a = k(t) * delta_t bzw. da = k(t) * dt
c) signalanalytische Auswertung des Signals (u(t)) mithilfe bzw. auf Basis der Größe a
d) Bestimmen der Maßgröße für die Drehzahl (n) aus dem Ergebnis der signalanalytischen Auswertung des Signals (u(t)).

**2.** Verfahren nach Anspruch 1, **dadurch gekennzeichnet, daß** das Meßsignal (u(t)) bei der Untersuchung mittels des Faktors (k) auf einen kurbelwinkelabhängigen Signalverlauf (u(a)) transformiert und dieser zur Bestimmung der Maßgröße für die Drehzahl durch Untersuchung auf Basis der zum angenäherten Kurbelwinkel proportionalen Größe (a) verwendet wird.

3. Verfahren nach Anspruch 1, **dadurch gekennzeichnet, daß** das Meßsignal (u(t)) mit Hilfe eines signalanalytischen Verfahren auf Basis des Kurbelwinkels (a) untersucht wird, wobei das Analyseverfahren den Faktor (k) zur Transformation der Zeitachse (t) auf die annähernd kurbelwinkelproportionale Größe (a) verwendet und aus dem so gewonnenen Untersuchungsergebnis die Maßgröße für die Drehzahl (n) ermittelt wird.

4. Verfahren nach einem der Ansprüche 1 bis 3, **dadurch gekennzeichnet, daß** zur Abschätzung der jeweiligen Drehzahl (n) ein kalibrierter Zusammenhang zwischen einem Intensitätsmaß des detektierten Schalls und der Drehzahl (n) verwendet wird.

5. Verfahren nach Anspruch 4, **dadurch gekennzeichnet, daß** die Kalibrierung vor Durchführung der Messung bei zumindest zwei stationären Drehzahlen (n) durchgeführt wird.

6. Verfahren nach einem oder mehreren der Ansprüche 1 bis 5, **dadurch gekennzeichnet, daß** die ermittelten Maßgrößen für bereits bestimmte Drehzahlen (n) zur Nachführung bzw. Verbesserung der Kalibrierparameter für nachfolgende Bestimmungen verwendet werden.

7. Verfahren nach einem oder mehreren der Ansprüche 1 bis 6, **dadurch gekennzeichnet, daß** für die Ermittlung des für die Drehzahlbestimmung signifikanten Signalpeaks im Ergebnisverlauf der Signalanalyse über einem Suchbereich um den Abszissen-Idealwert, vorzugsweise im Bereich zwischen dem 0,5-fachen und dem 2-fachen dieses Idealwerts, eine Gewichtsfunktion aufgespannt wird.

8. Verfahren nach einem oder mehreren der Ansprüche 1 bis 7, **dadurch gekennzeichnet, daß** für die Ermittlung des für die Drehzahlbestimmung signifikanten Signalpeaks im Ergebnisverlauf der Signalanalyse für die im Suchbereich ermittelten höchsten Signalpeaks ein Sicherheitsmaß gebildet und der Peak mit der höchsten Sicherheit als signifikanter Peak genommen wird.

9. Verfahren nach einem oder mehreren der Ansprüche 1 bis 8, **dadurch gekennzeichnet, daß** jeweils für die bestimmte Drehzahl ein Sicherheitsmaß gebildet und überprüft wird und daß bei einem Wert des Sicherheitsmaßes außerhalb eines vorgebbaren Toleranzbereiches die jeweilige Einzelbestimmung der Drehzahl als nicht signifikant bewertet und/oder dem die Drehzahlbestimmung durchführenden Personal entsprechend angezeigt wird.

10. Verfahren nach Anspruch 9, **dadurch gekennzeichnet, daß** bei nichtsignifikanter Drehzahlbestimmung die grob abgeschätzte Drehzahl selbst als solche ausgegeben wird.

11. Verfahren nach einem oder mehreren der Ansprüche 1 bis 10, **dadurch gekennzeichnet, daß** die zur Bestimmung der Maßgröße für die Drehzahl (n) durchgeführte Untersuchung des Signals auf Basis der angenähert kurbelwinkelproportionalen Größe (a) mit Hilfe einer Kepstrumanalyse erfolgt, wobei der im Umfeld von einer Periode des Arbeitsspiels der Brennkraftmaschine liegende signifikante Abszissenwert (A) als Korrekturgröße für die Ermittlung der tatsächlichen Drehzahl (n) aus der abgeschätzten Drehzahl verwendet wird.

12. Vorrichtung zur Bestimmung der Drehzahl (n) einer Brennkraftmaschine unter Durchführung eines Verfahrens nach einem oder mehreren der Ansprüche 1 bis 11, mit einem zumindest in der Nähe der Brennkraftmaschine angeordneten Schallsensor (12) zum fortlaufenden Detektieren des von der Maschine erzeugten Schalls (13,14) und Umwandeln in ein elektrisches Signal (u(t)), und einer damit und mit einer Ausgabeeinheit (31) verbundenen Auswerteeinrichtung (25), **gekennzeichnet durch** eine mit der Auswerteeinrichtung (25) in Verbindung stehende Abschätzeinheit (21) zur groben Abschätzung der jeweiligen Drehzahl der Brennkraftmaschine und Ermittlung eines Faktors (k(t)) aus der geschätzten Drehzahl und der bekannten Taktzahl der Brennkraftmaschine und **dadurch**, dass die Auswerteeinrichtung (25) eine Transformationseinheit (26) zur Bestimmung einer annähernd zum Kurbelwinkel proportionalen Größe a aus der Beziehung delta_a = k(t)* delta_t bzw. da = k(t)* dt und zur signalanalytischen Auswertung des Signals (u(t)) mithilfe bzw. auf Basis der Größe a zur Untersuchung des vom Schallsensor (12) in Abhängigkeit von der Zeit gelieferten Meßsignals (u(t)) auf Basis der angenähert kurbelwinkelproportionalen Größe (a) aufweist und eine Maßgröße für die Drehzahl (n) aus dem Ergebnis der signalanalytischen Auswertung des Signals (u(t)) ermittelt.

13. Vorrichtung nach Anspruch 12, **dadurch gekennzeichnet, daß** die Abschätzeinheit (21) eine aus dem Signal des Schallsensors (12) ein Intensitätsmaß ermittelnde Intensitätsmeßeinheit (22) zur Ermittlung des Faktors (k) aufweist.

**14.** Vorrichtung nach Anspruch 12 oder 13 zur Durchführung des Verfahrens nach Anspruch 9 oder 10, **dadurch gekennzeichnet, daß** die mit der Auswerteeinrichtung (25) verbundene Ausgabeeinheit (31) Elemente (35) zur Indikation einer nichtsignifikanten Drehzahlbestimmung und/oder zur Aufforderung, die Stelle der Schalldetektierung zu wechseln, und/oder zur Indikation, daß nur die abgeschätzte Drehzahl ausgegeben wird, aufweist.

**15.** Vorrichtung nach einem oder mehreren der Ansprüche 12 bis 14, **dadurch gekennzeichnet, daß** eine die gesamte Auswerte- und Kalibrierprozedur eines Meßablaufs steuemde Steuereinheit (36) vorgesehen ist, die vorzugsweise auch die für die Bestimmung und Verbesserung der Kalibrierparameter (P) geeigneten Meßsignale und Betriebszustände der Brennkraftmaschine selbsttätig bestimmt.

**16.** Vorrichtung nach Anspruch 15, **dadurch gekennzeichnet, daß** der Schallsensor (12) einen Luftschallsensor und einen Körperschallsensor aufweist und daß die Steuereinheit (36) selbsttätig die Verstärkung, Mischung, Auswahl und Zuordnung der Signale zu einem Hilfssignal für die Ermittlung der Hilfsdrehzahl und einem Hauptsignal für die Bestimmung der Drehzahl steuert.

## Claims

**1.** Method for detecting the engine speed (n) of a combustion engine, wherein the sound produced by the engine is detected continuously and converted into an electrical measured signal (u(t)), and wherein the measured signal (u(t)) is investigated with reference to the engine-speed information contained, and the result is used to determine a measurement parameter for the engine speed (n), **characterised by**

a) rough estimation of the relevant engine speed of the combustion engine and determination of a factor (k(t)) from the estimated engine speed and the known number of cycles of the combustion engine

b) determination of a parameter (a) approximately proportional to the crank angle from the relation delta_a = k(t) * delta_t and/or da = k(t) * dt

c) signal-analytical evaluation of the signal (u(t)) with the assistance of and/or on the basis of the parameter (a)

d) determination of the measurement parameter for the engine speed (n) from the results of the signal-analytical evaluation of the signal (u(t)).

**2.** Method according to claim 1, **characterised in that,** during the investigation, the measured signal (u(t)) is transformed by means of the factor (k) into a crank-angle-dependent signal characteristic (u(a)), and that this is used to determine the measurement parameter for the engine speed by investigation on the basis of the approximately crank-angle-proportional parameter (a).

**3.** Method according to claim 1, **characterised in that** the measured signal (u(t)) is investigated on the basis of the crank angle (a) using a signal-analytical method, wherein the analysis method uses the factor (k) to transform the time axis (t) to the approximately crank-angle-proportional measurement parameter (a), and that the measurement parameter for the engine speed (n) is determined from the investigative results obtained in this manner.

**4.** Method according to any one of claims 1 to 3, **characterised in that** a calibrated relation between an intensity parameter of the detected sound and the engine speed (n) is used to estimate the relevant engine speed.

**5.** Method according to claim 4, **characterised in that** the calibration is carried out for at least two stationary engine speeds (n) before implementing the measurement.

**6.** Method according to one or more of claims 1 to 5, **characterised in that** the measurement parameters investigated for already-determined engine speeds (n) are used to correct and/or improve the calibration parameters for subsequent measurements.

**7.** Method according to one or more of claims 1 to 6, **characterised in that** a weighting function is set up over a search range around the ideal abscissa value, preferably within a range between 0.5-times and the 2-times this ideal value, in order to determine the signal peak in the result characteristic of the signal analysis which is significant for the engine-speed measurement.

8. Method according to one or more of claims 1 to 7, **characterised in that,** in order to investigate the signal peak which is significant for the engine-speed measurement in the result characteristic of the signal analysis, a security value is formed for the maximum signal peaks investigated within the search range, and the peak with the highest security value is taken as the significant peak.

9. Method according to one or more of claims 1 to 8, **characterised in that,** a security value is formed and checked for each measured engine speed and that if the security value falls outside a predetermined tolerance range, the relevant individual engine-speed measurement is evaluated as non-significant, and/or the person carrying out the engine-speed measurement is informed of its non-significance via a display.

10. Method according to claim 9, **characterised in that,** in the event of a non-significant engine-speed measurement, the roughly estimated engine speed itself is displayed as the output value.

11. Method according to one or more of claims 1 to 10, **characterised in that** the investigation of the signal on the basis of the approximately crank-angle-proportional parameter (a), implemented to determine the measurement parameter for the engine speed (n), is carried out using a cepstrum, wherein the significant abscissa value (A) disposed in the proximity of one period of the working cycle of the combustion engine is used as a correction parameter to determine the actual engine speed (n) from the estimated engine speed.

12. Device for detecting the engine speed (n) of a combustion engine by implementing a method according to one or more of claims 1 to 11, with a sound sensor (12) arranged at least in the proximity of the combustion engine for continuous detection of the sound (13, 14) produced by the engine and conversion into an electrical signal (u(t)), and with an evaluation device (25) connected to the latter and to an output unit (31), **characterised by** an estimating unit (21) connected to the evaluation device (25) for the rough estimation of the relevant engine speed of the combustion engine and determination of a factor (k(t)) from the estimated engine speed and the known number of cycles of the combustion engine, and further **characterised in that** the evaluation device (25) provides a transformation unit (26) for determining an approximately crank-angle-proportional parameter (a) from the relation delta_a = k(t) * delta_t and/or da = k(t) * dt and for signal-analytical evaluation of the signal (u(t)) with the assistance of and/or on the basis of the parameter (a) in order to investigate the measured signal (u(t)), supplied in dependence on time by the sound sensor (12), on the basis of the approximately crank-angle-proportional parameter (a), and that the evaluation device determines a measurement parameter for the engine speed (n) from the results of the signal-analytical evaluation of the signal (u(t)).

13. Device according to claim 12, **characterised in that** the estimating unit (21) provides an intensity measuring unit (22), which determines an intensity parameter from the signal from the sound sensor (12) in order to determine the factor (k).

14. Device according to claim 12 or 13 for implementing the method according to claim 9 or 10, **characterised in that** the output unit (31) associated with the evaluation device (25) provides elements (35) for indicating a non-significant engine speed measurement and/or for requesting a change in the position of the sound sensor and/or for indicating that only an estimated engine speed has been displayed as the output.

15. Device according to one or more of claims 12 to 14, **characterised in that** a control unit (36), which controls all of the evaluation and calibration processes within a measuring procedure, is provided and preferably also automatically determines the measured signals and operating conditions of the combustion engine which are appropriate for determining and improving the calibration parameters (P).

16. Device according to claim 15, **characterised in that** the sound sensor (12) provides an air-borne sound sensor and a structure-borne sound sensor, and that the control unit (36) automatically controls the amplification, mixing, selection and allocation of the signals to an auxiliary signal for determining the auxiliary engine speed and to a main signal for measuring the engine speed.

**Revendications**

1. Procédé de détermination de la vitesse de rotation (n) d'un moteur à combustion interne, le son produit par la machine étant détecté de façon continue et converti en un signal de mesure électrique (u(t)), le signal de mesure (u(t)) étant examiné pour y trouver l'information contenue de vitesse de rotation et le résultat étant utilisé pour déterminer une indication quantitative de la vitesse de rotation (n), **caractérisé par**

a) une estimation grossière de la vitesse de rotation respective du moteur à combustion interne et la détermination d'un facteur (k(t)) à partir de la vitesse de rotation estimée et du nombre de temps connu du moteur à combustion interne,
b) détermination d'une grandeur a à peu près proportionnelle à l'angle de vibrequin à partir de la relation delta_a=k(t)* delta_t respectivement da=k(t)*dt,
c) évaluation analytique d'après les signaux, du signal (u(t)) à l'aide et/ou sur la base de la grandeur a,
d) détermination de l'indication quantitative de la vitesse de rotation (n) à partir du résultat de l'évaluation analytique par l'examen des signaux, effectué sur le signal (u(t)).

2. Procédé selon la revendication 1, **caractérisé en ce que** le signal de mesure (u(t)), lors de l'examen, est transformé au moyen du facteur (k) sur un signal d'allure de courbe (u(a)) dépendant de l'angle de vibrequin, et ce signal d'allure étant utilisé pour déterminer l'indication quantitative de la vitesse de rotation, par examen basé sur la grandeur (a), à peu proportionnelle à l'angle de vibrequin.

3. Procédé selon la revendication 1, **caractérisé en ce que** le signal de mesure (u(t)) est examiné à l'aide d'un procédé analytique opérant sur les signaux, basé sur l'angle de vibrequin (a), le procédé d'analyse utilisant le facteur (k) pour la transformation de l'axe des temps (t) à la grandeur (a) à peu proportionnelle à l'angle de vibrequin et déterminant l'indication quantitative de la vitesse de rotation (n), à partir du résultat d'examen ainsi obtenu.

4. Procédé selon une des revendications 1 à 3, **caractérisé en ce que**, pour estimer la vitesse de rotation (n) spécifique, est utilisée une liaison étalonnée, entre une indication d'intensité du bruit détecté et la vitesse de rotation (n).

5. Procédé selon la revendication 4, **caractérisé en ce que** l'étalonnage est effectué avant d'effectuer la mesure, pour au moins deux vitesses de rotation stationnaires (n).

6. Procédé selon une ou plusieurs des revendications 1 à 5, **caractérisé en ce que** les grandeurs de mesure déterminées, pour des vitesses de rotation (n) déjà déterminées, sont utilisées pour asservir ou améliorer les paramètres d'étalonnage pour des estimations subséquentes.

7. Procédé selon une ou plusieurs des revendications 1 à 6, **caractérisé en ce que**, pour déterminer le pic de signal, significatif pour la détermination de la vitesse de rotation, dans l'allure obtenue en résultat de l'analyse des signaux sur une plage de recherche autour de la valeur idéale en abscisse de préférence dans la zone comprise entre 0,5 fois et 2 fois cette valeur idéale, on fait intervenir une fonction de pondération.

8. Procédé selon une ou plusieurs des revendications 1 à 7, **caractérisé en ce que**, pour déterminer le pic de signal significatif pour la détermination de la vitesse de rotation, dans l'allure obtenue en résultat de l'analyse des signaux, pour le pic de signal maximum déterminé dans la plage examinée, on forme une valeur de confiance et le pic ayant le niveau de confiance maximal est pris comme étant le pic significatif.

9. Procédé selon une ou plusieurs des revendications 1 à 8, **caractérisé en ce que** chaque fois, pour la vitesse de rotation déterminée, on forme et on vérifie une valeur de confiance, et **en ce que**, dans le cas ou une valeur de confiance est hors d'une plage de tolérance susceptible d'être prédéterminée, la détermination individuelle respective de la vitesse de rotation est évaluée comme non significative et/ou est affichée, de manière correspondante, au personnel procédant à la détermination de la vitesse de rotation.

10. Procédé selon la revendication 9, **caractérisé en ce que**, dans le cas où la détermination de la vitesse de rotation n'est pas significative, la vitesse de rotation estimée grossièrement elle-même est éditée en tant que telle.

11. Procédé selon une ou plusieurs des revendications 1 à 10, **caractérisé en ce que** l'examen, effectué pour déterminer l'indication quantitative de la vitesse de rotation (n) sur le signal, à base de la grandeur (a) à peu près proportionnelle à l'angle du vibrequin, se fait en utilisant une analyse de cepstre, la valeur d'abscisse (A) significative, située dans l'environnement d'une période du cycle opératoire du moteur à combustion interne, étant utilisée comme grandeur de correction pour la détermination de la vitesse de rotation (n) effective, à partir de la vitesse de rotation estimée.

12. Dispositif de détermination de la vitesse de rotation (n) d'un moteur à combustion interne mettant en oeuvre un procédé selon une ou plusieurs des revendications 1 à 11, avec au moins un capteur de bruit (12) disposé au moins à proximité du moteur à combustion interne, afin de détecter en continu le bruit (13,14) produit par le moteur et le convertir en un signal électrique (u(t)), et un dispositif d'évaluation (25) lui étant relié et étant relié à une unité d'édition (31), **caractérisé par** une unité d'estimation (21) reliée au dispositif d'évaluation (25), afin d'obtenir une estimation grossière de la vitesse de rotation respective du moteur à combustion interne et de déterminer un facteur (k(t)) à partir de la vitesse de rotation estimée et du nombre de temps, connu, du moteur à combustion, et en ce que le dispositif d'évaluation (25) présente une unité de transformation (26) pour déterminer une grandeur a, à peu près proportionnelle à l'angle de vibrequin, à partir de la relation delta_a=k(t)* delta_t, respectivement da=k(t)*dt, et pour l'évaluation analytique par analyse des signaux effectuée sur le signal (u(t)), à l'aide et/ou sur la base de la grandeur a, afin d'examiner le signal de mesure (u(t)) fourni en fonction du temps par le capteur de bruit (12), en se basant sur la grandeur (a) à peu près proportionnelle à l'angle de vibrequin, et détermine une grandeur de mesure concernant la vitesse de rotation (n) à partir du résultat de l'évaluation analytique basée sur les signaux, effectuée sur le signal (u(t)).

13. Dispositif selon la revendication 12, **caractérisé en ce que** l'unité d'estimation (21) présente une unité de mesure d'intensité (22) déterminant une intensité quantitative d'intensité à partir du signal du capteur de bruit (12), afin de déterminer le facteur (k).

14. Dispositif selon la revendication 12 ou 13 pour la mise en oeuvre du procédé selon la revendication 9 ou 10, **caractérisé en ce que** l'unité d'édition (31) reliée au dispositif d'évaluation (25) présente des éléments (35) pour l'indication d'une détermination de vitesse de rotation non significative et/ou pour la requête de changer l'emplacement de la détection de bruit, et/ou pour une indication du fait que seule la vitesse de rotation estimée est éditée.

15. Dispositif selon une ou plusieurs des revendications 12 à 14, **caractérisé en ce qu'**est prévue une unité de commande (36) commandant l'ensemble de la procédure d'évaluation et d'étalonnage d'un déroulement de mesure, unité de commande qui, de préférence, détermine également les signaux de mesure et les états de fonctionnement du moteur à combustion interne, convenant pour déterminer et améliorer les paramètres d'étalonnage (P).

16. Dispositif selon la revendication 15, **caractérisé en ce que** le capteur de bruit (12) présente un capteur de bruit aérien et un capteur de bruit de corps, et **en ce que** l'unité de commande (36) commande automatiquement l'amplification, le mélange, la sélection et l'association des signaux, pour obtenir un signal auxiliaire afin de déterminer la vitesse de rotation auxiliaire, et un signal principal, afin de déterminer la vitesse de rotation.

**Fig. 1**

## Fig. 2a

## Fig. 2b

# Fig. 3a

# Fig. 3b

# Fig. 3c

Tau = 0.055640 s

*Fig. 4a*

—— u_t_s_hl

*Fig. 4b*

—— spek_s_hl.b

*Fig. 4c*

—— kep_s_hl.b   —⊖— regression_

*Fig. 5a*

u_s_a

a [cycles]

*Fig. 5b*

spec_s_a

10^-3

[cycle-orders]

*Fig. 5c*

cep_s_a        cep_9      regression      weight

10^-3

A = 1.0339

a [cycles]

*Fig. 6*